# EUROPEAN PATENT SPECIFICATION

(11) **EP 3 288 035 B1**
(45) Date of publication and mention of the grant of the patent: **12.10.2022**
(21) Application number: 17186936.5
(22) Date of filing: 18.08.2017
(51) Int. Cl.: G10L 25/48, G09B 19/00, G09B 5/04, G10L 15/08, G10L 15/22

(54) **PERSONAL AUDIO ANALYTICS AND BEHAVIOR MODIFICATION FEEDBACK**
PERSÖNLICHE AUDIO-ANALYSE UND VERHALTENSÄNDERUNGS-FEEDBACK
ANALYSE AUDIO PERSONNELLE ET RÉTROACTION PORTANT SUR UNE MODIFICATION DU COMPORTEMENT

(30) Priority: 22.08.2016 EP 16185162
(43) Date of publication of application: 28.02.2018
(73) Proprietor: Dolby Laboratories Licensing Corp., San Francisco, CA 94103 (US)
(72) Inventor: CARTWRIGHT, Richard J., McMahons Point, NSW 2060 (AU); MARTIN, Peter, McMahons Point, NSW 2060 (AU); MCGRATH, Christopher Stanley, Rose Bay, New South Wales 2029 (AU); DICKINS, Glenn N., McMahons Point, NSW 2060 (AU)
(74) Representative: Dolby International AB Patent Group Europe

(56) References cited:
- US-A1- 2003 154 072
- US-A1- 2015 348 570
- US-A1- 2016 183 867

## Description

### TECHNICAL FIELD

This disclosure relates to the processing of audio signals. In particular, this disclosure relates to processing audio signals related to conversations, including but not limited to processing audio signals for one-on-one conversations, group conversations, conferencing, teleconferencing or video conferencing.

### BACKGROUND

It can be difficult for a person to have an objectively reasonable perspective regarding the way he or she communicates with others. For example, the person may not realize how often he or she uses filler words such as "basically" or "like." The person may not notice how frequently that he or she uses profanity. The person may not be aware that he or she has a tendency to interrupt other conversation participants, to dominate conversations, to speak loudly and/or to speak rapidly. Others may be well aware of these issues, but may not inform the person because of the potential awkwardness of doing so and the possibility of damaging a relationship with the person.

US2015348570 (A1) describes a system for real-time analysis of audio signals. First digital audio signals are retrieved from memory. First computed streamed signal information corresponding to each of the first digital audio signals is generated by computing first metrics data for the first digital audio signals, the first computed streamed signal information including the first metrics data. The computed first streamed signal information is stored in the memory. The first computed streamed signal information is transmitted to one or more computing devices. Transmitting the first computed streamed signal information to the one or more computing devices causes the first computed streamed signal information to be displayed at the one or more computing devices.

US2016183867 (A1) presents a method and device for enabling remote speech disorder therapy. The method includes setting a first device with at least one exercise to be performed during a current therapy session, wherein each exercise includes at least a difficulty parameter; receiving a voice production of a user of the first device; processing the received voice production to evaluate a correct execution of the voice production respective of the at least one difficulty parameter; generating a feedback based on the analysis; and outputting the generated feedback to the first device.

US2003154072 (A1) describes a method of analyzing a collection of calls at one or more call center stations. The method includes receiving lexical content of a telephone call handled by a call center agent and identifying one or more features of the telephone call based on the received lexical content. The method also includes collectively analyzing the stored features along with the stored features of other telephone calls and reporting results of the analyzing.

### SUMMARY

The present invention provides an apparatus, a non-transitory medium, and a method as defined by the appended independent claims. Preferred embodiments are described in the dependent claims.

At least some aspects of the present disclosure may be implemented via apparatus. For example, one or more devices may be capable of performing, at least in part, the methods disclosed herein.

According to an aspect of the invention, an apparatus includes an interface system and a control system. The interface system may include a network interface, an interface between the control system and a memory system, an interface between the control system and another device and/or an external device interface. The control system may include at least one of a general purpose single- or multi-chip processor, a digital signal processor (DSP), an application specific integrated circuit (ASIC), a field programmable gate array (FPGA) or other programmable logic device, discrete gate or transistor logic, or discrete hardware components.

The control system may be capable of performing, at least in part, the methods disclosed herein. The control system is capable of receiving, via the interface system, microphone data. The control system is capable of determining, based at least in part on the microphone data, instances of one or more acoustic events. The instances of one or more acoustic events include conversational dynamics data. Further, determining an instance of an acoustic event involves determining an instance of a rising inflection in a user's speech, such as a rising inflection at the end of a sentence, and determining whether the user's speech corresponds to a question or to a statement. The control system is capable of providing behavior modification feedback, via the interface system, if an instance of a rising inflection is determined in the user's speech when it is determined that the user's speech does not correspond to a statement.

In some examples, determining an instance of an acoustic event may involve determining an instance of exceeding a conversational dominance metric. In some such examples, the conversational dominance metric may be based, at least in part, on a fraction of total speech uttered by a dominant conversation participant during a time interval. According to some examples, the conversational dominance metric may be based, at least in part, on one or more indications of a conversation participant interrupting another conversation participant.

According to some implementations, determining an instance of an acoustic event may involve determining an instance of laughter, stuttering or disfluency. In some examples, determining an instance of an acoustic event may involve determining an instance of a rate of speech that is above or below a threshold rate of speech. In some implementations, determining an instance of an acoustic event may involve determining an instance of speech that is above or below a threshold volume. According to some examples, determining an instance of an acoustic event may involve determining an instance of a keyword.

The behavior modification feedback may vary according to the particular implementation. According to examples not according to the claimed invention, providing behavior modification feedback may involve assessing a financial penalty. According to examples not according to the claimed invention, providing behavior modification feedback may involve providing haptic, audio and/or visual feedback.

According to examples not according to the claimed invention, the interface system may include a user interface system. In some such implementations, providing behavior modification feedback may involve providing at least one of haptic, audio and/or visual feedback via the user interface system. According to examples not according to the claimed invention, the control system may be capable of providing user prompts, via the user interface system, regarding one or more acoustic event types.

According to examples not according to the claimed invention, the control system may be capable of receiving user input, via the user interface system, regarding the one or more selected acoustic event types. According to examples not according to the claimed invention, determining instances of one or more acoustic events may involve determining instances of one or more acoustic events corresponding with the one or more selected acoustic event types.

According to examples not according to the claimed invention, the control system may be capable of receiving user input, via the user interface system, indicating a request to provide acoustic event information regarding instances of one or more acoustic events. According to examples not according to the claimed invention, the control system may be capable of controlling the user interface system to provide the acoustic event information. According to examples not according to the claimed invention, the apparatus may include a display. According to examples not according to the claimed invention, the control system may be capable of controlling the display to present acoustic event images that represent instances of the acoustic event information.

According to examples not according to the claimed invention, the apparatus may include a speaker system having at least one speaker and the user interface system may include a touch sensor system proximate the display. According to examples not according to the claimed invention, the control system may be capable of receiving, via the touch sensor system, an indication of a touch proximate a selected acoustic event image. According to examples not according to the claimed invention, the control system may be capable of providing, via the speaker system, a playback of an acoustic event corresponding with the selected acoustic event image. According to examples not according to the claimed invention, the playback of the acoustic event may involve playback of conversation participant speech of multiple conversation participants. The control system may be capable of rendering the conversation participant speech in a virtual acoustic space such that each of the conversation participants has a respective different virtual conversation participant position. According to examples not according to the claimed invention, the control system may be capable of scheduling the conversation participant speech for playback such that an amount of playback overlap between at least two output talkspurts of the conversation participant speech may be greater than an amount of original overlap between two corresponding input talkspurts of an original conversation. According to examples not according to the claimed invention, the scheduling may be performed, at least in part, according to a set of perceptually-motivated rules.

According to some examples, an audio system may include the apparatus. The audio system may include a microphone system having two or more microphones. According to examples not according to the claimed invention, the microphone system may be configured for communication with the control system via the interface system. According to examples not according to the claimed invention, the microphone system may include at least two directional microphones. According to examples not according to the claimed invention, the microphone system may be configured for communication with the control system via a wireless interface. According to examples not according to the claimed invention, the microphone system may reside in a wearable device. In some such examples, the wearable device may be a brooch, a watch or a dongle.

Some implementations disclosed herein may involve a method of providing behavior modification feedback. In some examples, the method may involve receiving (e.g., by a control system) microphone data. In some such examples, the method may involve determining, by the control system and based at least in part on the microphone data, instances of one or more acoustic events. The instances of one or more acoustic events may, in some examples, include conversational dynamics data. According to some examples, the method may involve providing behavior modification feedback (e.g., via an interface system) corresponding with the instances of the one or more acoustic events.

In some examples, providing behavior modification feedback may involve the control system providing at least one of haptic, audio or visual feedback via a user interface system. According to some implementations, determining an instance of an acoustic event may involve determining an instance of a keyword, an instance of laughter, an instance of a rising inflection (e.g., at the end of a sentence), an instance of a rate of speech that may be above or below a threshold rate of speech, an instance of speech that may be above or below a threshold volume, an instance of ambient noise that may be above an ambient noise threshold, an instance of exceeding a conversational dominance metric that indicates a fraction of total speech uttered by a dominant conversation participant during a time interval, an instance of stuttering and/or an instance of disfluency.

Some or all of the methods described herein may be performed by one or more devices according to instructions (e.g., software) stored on non-transitory media. Such non-transitory media may include memory devices such as those described herein, including but not limited to random access memory (RAM) devices, read-only memory (ROM) devices, etc. Accordingly, various innovative aspects of the subject matter described in this disclosure can be implemented in a non-transitory medium having software stored thereon. The software may, for example, include instructions for controlling at least one device to process audio data. The software may, for example, be executable by one or more components of a control system such as those disclosed herein.

According to some examples, the software may include instructions for controlling one or more devices to perform a method of providing behavior modification feedback. The method may involve receiving (e.g., by a control system) microphone data. In some such examples, the method may involve determining, by the control system and based at least in part on the microphone data, instances of one or more acoustic events. The instances of one or more acoustic events may, in some examples, include conversational dynamics data. According to some examples, the method may involve providing behavior modification feedback (e.g., via an interface system) corresponding with the instances of the one or more acoustic events.

In some examples, providing behavior modification feedback may involve providing at least one of haptic, audio or visual feedback. According to some implementations, determining an instance of an acoustic event may involve determining an instance of a keyword, an instance of laughter, an instance of a rising inflection (e.g., at the end of a sentence), an instance of a rate of speech that may be above or below a threshold rate of speech, an instance of speech that may be above or below a threshold volume, an instance of ambient noise that may be above an ambient noise threshold, an instance of exceeding a conversational dominance metric that indicates a fraction of total speech uttered by a dominant conversation participant during a time interval, an instance of stuttering and/or an instance of disfluency.

Details of one or more implementations of the subject matter described in this specification are set forth in the accompanying drawings and the description below. Other features, aspects, and advantages will become apparent from the description, the drawings, and the claims. Note that the relative dimensions of the following figures may not be drawn to scale.

### BRIEF DESCRIPTION OF THE DRAWINGS

Figure 1A is a block diagram that shows examples of components of an apparatus capable of implementing various aspects of this disclosure.
Figure 1B is a flow diagram that outlines one example of a method that may be performed by the apparatus of Figure 1A.
Figure 1C shows examples of a personal analysis device (PAD) and a personal audio capture device (PACD).
Figure 2 is a block diagram that shows an example of a PACD and examples of PAD components.
Figure 3 is a block diagram that shows example elements of a PACD according to one implementation.
Figure 4A shows an example of a PAD displaying recently detected acoustic events.
Figure 4B shows an alternative example of a PAD displaying recently detected acoustic events.
Figure 5 shows an example of a GUI for configuring target acoustic events and related parameters.
Figure 6A shows an example of a GUI for training and configuration of a keyword detector for a particular keyword.
Figure 6B shows an alternative example of a GUI for training and configuration of a keyword detector for a particular keyword.
Figure 6C shows another example of a GUI for training and configuration of a keyword detector for a particular keyword.
Figure 6D shows another example of a GUI for training and configuration of a keyword detector for a particular keyword.
Figure 7 shows an example of a GUI for providing a summary of target acoustic event detection.
Figure 8 shows an example of a GUI for providing a detailed log history of target acoustic event detection in a graphical form.
Figure 9 shows an example of a microphone array for a PACD which is not according to the invention.
Figure 10 is a block diagram that shows example elements of a signal conditioning unit for a PACD which is not according to the invention.
Figure 11 shows an example of a PACD in a wristwatch form factor which is not according to the invention.
Figure 12 shows an example embodiment of the PACD in a brooch form factor which is not according to the invention.
Figure 13 shows an example embodiment of a head-mounted PACD which is not according to the invention.

Like reference numbers and designations in the various drawings indicate like elements.

### DESCRIPTION OF EXAMPLE EMBODIMENTS

The following description is directed to certain implementations for the purposes of describing some innovative aspects of this disclosure, as well as examples of contexts in which these innovative aspects may be implemented. However, the teachings herein can be applied in various different ways. Moreover, the described embodiments may be implemented in a variety of hardware, software, firmware, etc. For example, aspects of the present application may be embodied, at least in part, in an apparatus, a system that includes more than one device, a method, a computer program product, etc. Accordingly, aspects of the present application may take the form of a hardware embodiment, a software embodiment (including firmware, resident software, microcodes, etc.) and/or an embodiment combining both software and hardware aspects. Such embodiments may be referred to herein as a "circuit," a "module" or "engine." Some aspects of the present application may take the form of a computer program product embodied in one or more non-transitory media having computer readable program code embodied thereon. Such non-transitory media may, for example, include a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. Accordingly, the teachings of this disclosure are not intended to be limited to the implementations shown in the figures and/or described herein, but instead have wide applicability.

In view of the above-described difficulties for a person to have an objectively reasonable perspective regarding the way he or she communicates with others, some aspects of the present disclosure can provide metrics and other information to a user in order to support desired speech-related lifestyle modifications, such as:
- reducing overuse of certain words in speech;
- reducing the use of vulgar language;
- speaking slowly and clearly;
- listening to others instead of talking incessantly;
- increasing social or workplace interactions by participating more in conversations;
- speaking at a socially acceptable level; and/or
- reducing inappropriate use of rising inflection during speech.

However, the implementations of this disclosure are not limited to speech-related issues. Some aspects of the present disclosure can provide metrics and other information to a user in order to support other desired lifestyle modifications, such as:
- protecting hearing;
- spending more time outdoors;
- increasing social interactions; and/or
- augmenting memory.

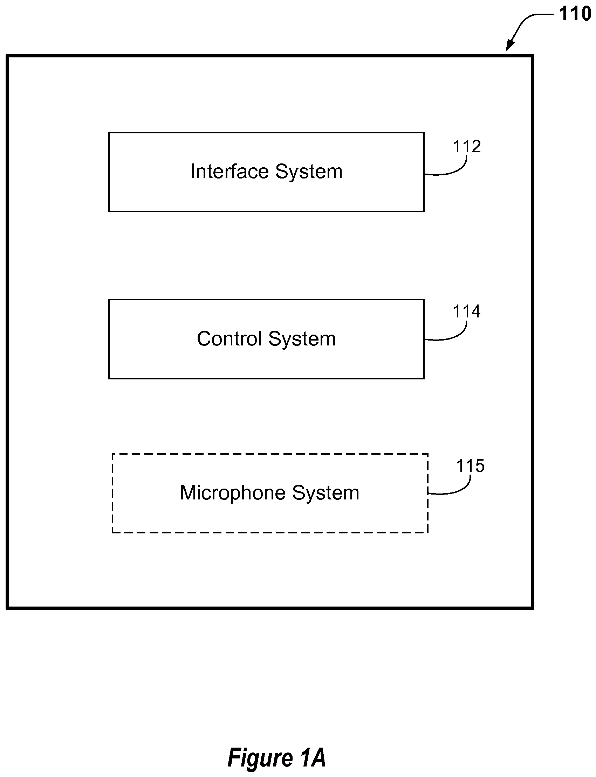

Figure 1A is a block diagram that shows examples of components of a system capable of implementing various aspects of this disclosure. The components of the system 110 may be implemented via hardware, via software stored on non-transitory media, via firmware and/or by combinations thereof. The types and numbers of components shown in Figure 1A, as well as other figures disclosed herein, are merely shown by way of example. Alternative implementations may include more, fewer and/or different components.

In this example, the system 110 includes an interface system 112 and a control system 114. The interface system 112 may include one or more network interfaces, one or more interfaces between the control system 114 and a memory system and/or one or more external device interfaces (such as one or more universal serial bus (USB) interfaces). In some implementations, the interface system 112 may include a user interface system. The user interface system may be capable of receiving input from a user. In some implementations, the user interface system may be capable of providing feedback to a user. For example, the user interface system may include one or more displays with corresponding touch and/or gesture detection systems. In some examples, the user interface system may include one or more speakers. According to some examples, the user interface system may include apparatus for providing haptic feedback, such as a motor, a vibrator, etc. The control system 114 may, for example, include a general purpose single- or multi-chip processor, a digital signal processor (DSP), an application specific integrated circuit (ASIC), a field programmable gate array (FPGA) or other programmable logic device, discrete gate or transistor logic, and/or discrete hardware components.

The system 110 may or may not include the optional microphone system 115, depending on the particular implementation. In some examples, the optional microphone system 115 may include one or more directional microphones.

In some examples, the system 110 may be implemented in a single device. For example, in some such examples the system 110 may be implemented in what may be referred to herein as a Personal Analysis Device (PAD). The PAD may be implemented in a smart phone or other mobile device, in a laptop, etc. In some implementations, the system 110 may be implemented in what may be referred to herein as a Personal Audio Capture Device (PACD). In some such examples, the PACD may be implemented in a wearable device such as a watch, a dongle, a brooch, a headset or another such head-mounted device, earbuds, etc. Various examples of PADs and PACDs are provided herein.

However, in some implementations, the system 110 may be implemented in more than one device. In some such implementations, functionality of the control system 114 may be included in more than one device. Alternatively, or additionally, the system 110 may be implemented via one device that includes an instance of the microphone system 115 and via at least one other device. For example, in some such implementations the system 110 may be implemented via a first device (such as a PAD) and a second device (such as a PACD) that includes an instance of the microphone system 115.

According to some implementations, the system 110 may include cloud-based implementations. In some such implementations, the system 110 may be implemented, at least in part, via a server or another such device that is accessible via a network. In some such implementations, the system 110 may be implemented (at least in part) via a PAD and a server.

In some examples, the system 110 may be a component of another device. For example, in some implementations the system 110 may be a component of a server, e.g., a line card.

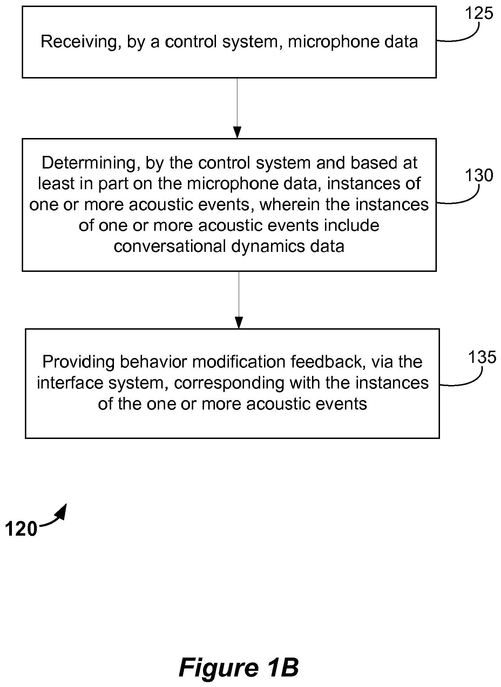

Figure 1B is a flow diagram that outlines one example of a method that may be performed by the apparatus of Figure 1A. The blocks of method 120, like other methods described herein, are not necessarily performed in the order indicated. Moreover, such methods may include more or fewer blocks than shown and/or described.

In this implementation, block 125 involves receiving microphone data. According to this example, a control system such as the control system 114 of Figure 1A receives the microphone data in block 125.

In this example, block 130 involves determining, based at least in part on the microphone data, instances of one or more acoustic events. According to some examples, block 130 may involve determining a volume or level of an acoustic event. For example, block 130 may involve determining an instance of ambient noise that is above an ambient noise threshold. In some instances, block 130 may involve determining an instance of laughter.

Alternatively, or additionally, in some examples, block 130 may involve speech detection. For example, block 130 may involve determining an instance of speech that is above a threshold volume. According to some examples, block 130 may involve determining an instance of a rate of speech that is above a threshold rate of speech. In some embodiments of the present invention , block 130 may involve determining an instance of a rising inflection at the end of a sentence.

Alternatively, or additionally, in some examples, block 130 may involve an automatic speech recognition process and/or analysis of the results of an automatic speech recognition process. According to some such examples, block 130 may involve determining an instance of a keyword such as "like," "basically," "totally" or another keyword. In some such examples, block 130 may involve determining an instance of a vulgar, profane or otherwise potentially objectionable word.

However, in the implementation shown in Figure 1B, the process of determining instances of the one or more acoustic events includes determining at least one instance of conversational dynamics data. According to some such implementations, block 130 may involve analyzing acoustic events that correspond to speech to determine the conversational dynamics data. In some such implementations, block 130 may involve a process of differentiating one person's speech, such as the speech of a person who is using a PACD, from the speech of one or more other conversation participants. However, in alternative implementations, the received microphone data may differentiate the speech of a person who is using a PACD from the speech of one or more other conversation participants. Some examples are described below.

In some instances, determining the conversational dynamics data may involve determining data indicating the frequency of conversation participant speech and/or the duration of conversation participant speech. According to some such examples, block 130 may involve identifying a dominant conversation participant, e.g., during a particular time interval, during a particular conversation, etc. The dominant conversation participant may, for example, be the conversation participant who spoke the most during the time interval.

In some implementations, block 130 may involve determining a conversational dominance metric. According to some such implementations, the conversational dominance metric may indicate a fraction of the total speech uttered by a dominant conversation participant during a time interval, during a particular conversation, etc.

Alternatively, or additionally, the conversational dominance metric may be based, at least in part, on one or more indications that a conversation participant is interrupting or "talking over" another conversation participant. For example, the conversational dominance metric may be based, at least in part, on the number of instances of a conversation participant interrupting or "talking over" another conversation participant during a conversation, during a period of time, etc. In some such examples, determining the conversational dynamics data may involve determining doubletalk data indicating instances of conversation participant doubletalk during which at least two conversation participants are speaking simultaneously. In some examples, an instance of "talking over" may be determined if there is an instance of doubletalk caused when a second speaker begins talking before a first speaker has finished talking, but the first speaker continues to talk. In some examples, an instance of an interruption may be determined if the second speaker begins talking before a first speaker has finished talking, but the first speaker does not continue to talk. In some implementations, block 130 may involve determining a doubletalk ratio, which may indicate a fraction of speech time, in a time interval, during which at least two conversation participants are speaking simultaneously.

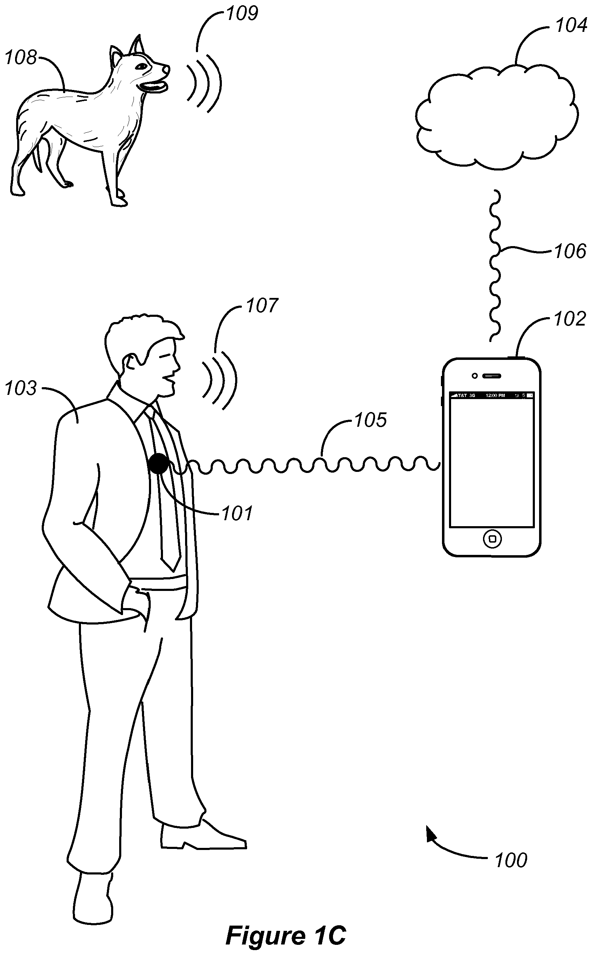

Figure 1C shows examples of a personal analysis device (PAD) and a personal audio capture device (PACD). In this example, the PACD 101 is a device that includes one or more microphones and is designed to capture microphone data that corresponds to the user's voice 107. In this example, the PACD 101 is also configured to capture environmental sounds 109, which include barks of the dog 108 shown in Figure 1C. According to this example, the PACD 101 is a wearable device that is attached to the clothing of the user 103, which may be held in place by one or more pins, other fasteners, or magnets.

In other implementations, some examples of which are provided herein, the PACD 101 may have a different form factor. For example, the PACD 101 may be implemented in a watch, a hat, a headset, earbuds, a cord for earbuds, an ear ring, a necklace, spectacles, etc. In other examples, the PACD 101 may be integrated into clothing. In further examples, the PACD 101 may be implemented in a portable device that may or may not be configured to be worn, but which may be designed for placing on a table, a stand, or another surface. In yet other examples, the PACD 101 may be integrated into furniture, integrated into a portion of a car (such as a dashboard, a sun visor or a steering wheel), mounted on a wall of a building, etc.

In the example shown in Figure 1C, the PAD 102 is implemented by a mobile device, which is a smart phone in this example. According to some such examples, the PAD 102 may be implemented via one or more applications or "apps" that are executable by the smart phone. According to some examples, the PAD 102 may be capable of performing analytics on the audio features that are included in microphone data obtained from the PACD 101.

In this example, the PAD 102 is capable of communicating with one or more devices, such as servers, of a "cloud-based" service provider 104 via a network connection 106. Accordingly, the functionality described herein as being performed by the PAD 102 (or, more generally, by the control system 114 of Figure 1A) may, in some instances, be performed at least in part by the cloud-based service provider 104. The network connection 106 may, for example, be a wireless internet connection provided over a wireless local area network (WLAN), e.g., via WiFi or via a mobile telecommunications standard such as a third-generation mobile telecommunications standard (3G) or a fourth-generation mobile telecommunications standard (4G).

In the example shown in Figure 1C, the PAD 102 and the PACD 101 are capable of wireless communication via a data interchange connection 105. The data interchange connection 105 may, for example, be provided according to a standard such as Bluetooth, Bluetooth Low Energy, Nordic Semiconductor's Enhanced Shockburst, Zigbee, IEEE 802.11 "WiFi," etc. In some such examples, the PAD 102 and the PACD 101 may include instances of the interface system 112 that are capable of wireless communication.

According to some such examples, the PAD 102 may be capable of receiving data (such as microphone data) from the PACD 101 in what may be referred to herein as "near-real-time." As used herein, the term "near-real-time" may be a time frame that includes seconds of latency, tens of seconds of latency, or in some examples, even minutes of latency. Because the data are not received from the PACD 101 for the purpose of real-time communication in this example, low-latency streaming is not required. For example, one or more seconds of latency may be perfectly acceptable in some implementations of the PAD 102 and the PACD 101. In some instances, tens of seconds of latency or even minutes of latency may be acceptable. In some such examples, the PAD 102 may be capable of performing analytics in near-real-time, as measured from the time at which microphone data are captured by the PACD 101 or as measured from the time at which microphone data are received from the PACD 101.

In this example, microphone data may be obtained by the PAD 102 from the PACD wirelessly (via data interchange connection 105 in this example) whenever radio conditions permit. According to some implementations, the PACD 101 may be configured to store microphone data during times during which radio conditions are not conducive to communication (for example, when the user 103 is currently walking past a microwave oven which is jamming the 2.4 GHz band) and then provide such microphone data to the PAD 102 when wireless communication with the PAD 102 can continue.

According to some implementations, the PAD 102 may be capable of detecting and logging discrete acoustic events such as particular words, the time duration of conversation participants' speech, the volume of conversation participants' speech, conversational dynamics (such as indications of conversational dominance), laughter, etc. In some such implementations, the PAD 102 may be capable of monitoring piecewise-continuous parameters of speech (such as the rate of speech, speech prosody, pitch trajectory, etc.). For example, in some such implementations the PAD 102 may be capable of detecting a rising inflection at the end of sentences that are not questions. In some implementations the PAD 102 may be capable of detecting and logging ambient sound data, such as instances of ambient sounds that are above a predetermined pressure threshold, durations of time when ambient sounds are above a predetermined pressure threshold, etc.

According to some implementations, a user interface of the PAD 102, of the PACD 101 or of another device (such as another device configured for communication with the PAD 102 and/or the PACD 101 via a network) may provide feedback to the user 103 that corresponds with instances of one or more acoustic events. The user interface may be part of the interface system 112 that is shown in Figure 1A. Some such feedback may be referred to herein as "behavior modification feedback" because the feedback may be responsive to a user's desire to change one or more types of behavior. The user's desire may, for example, previously have been indicated via user input received via the interface system 112, e.g., via a graphical user interface (GUI) like one of those disclosed herein, indicating one or more user-selected acoustic events and one or more corresponding goals that the user 103 may choose to set with respect to such acoustic events. Following are examples of goals that the user 103 may indicate:
- I want to say "basically," "like" or another keyword less frequently.
- I want to swear less frequently.
- I am a naturally quiet speaker. I want to be confident that I am clearly projecting my voice at an appropriate volume during presentations at work.
- To improve memory or confirm a detail, I occasionally want to immediately replay something I have just said (e.g., by saying the word "replay").
- I have developed the habit of using a rising inflection at the end of sentences that are not questions and I want to reduce instances of using this inflection.
- I want to reduce the amount of time I am exposed to loud noise.
- I sometimes talk too fast. I wish to be notified when I do so to help me speak slowly and clearly.
- I sometimes talk too loudly. I wish to talk at a more socially acceptable volume.
- Sometimes I talk too much and don't listen enough to what others say. I want to be a better listener.
- I am introverted at social events. I want to improve my sociability by talking to more people.
- I wish to track how often I laugh as an indicator of my mental well-being.
- I spend too much time indoors. I should get out more.
- I sometimes forget details. I want to be able to replay any speech within a predetermined time interval (e.g., within 5 seconds) of the keyword "remember" that occurred in the last month.

According to some such examples, providing behavior modification feedback may involve providing haptic feedback, audio feedback and/or visual feedback via the user interface system. Various examples are described below.

In some examples, the PAD 102 may be capable of causing feedback to be provided to the user 103 according to the frequency of predetermined acoustic events, the type of predetermined acoustic events, etc. In some such examples, the user 103 may be able to track his or her progress against goals that he or she has previously defined. Alternatively, or additionally, the PAD 102 and/or the PACD 101 may be capable of providing direct behavior modification feedback when certain kinds of acoustic events are detected, such as haptic feedback from a vibrating motor or solenoid, audible feedback in the form of a beep, a frowning emoji provided on a display, a picture of a person provided on a display (such as the user's parent, the user's child, etc.), and/or via another type of feedback.

According to some implementations, the PAD 102, the PACD 101 and/or the associated "cloud" service 104 may be configured to penalize the user when certain acoustic events are detected. In some examples, the penalty may be a financial penalty, e.g., automatically transferring money from the user's bank account to a nominated charity. In some such implementations, the PAD 102, the PACD 101 and/or the associated "cloud" service 104 may be configured to provide the user 103 with notice that such a penalty has been imposed.

Alternatively, or additionally, the PAD 102, the PACD 101 and/or the associated "cloud" service 104 may cause an update to a "leaderboard" or other such publicly-shared scorecard that the user 103 has chosen to share via a social media application. The leaderboard or scorecard may, for example, indicate one or more of the user 103's goals and the user 103's recent performance metrics relative to those goals. A user may be able to limit the extent of sharing in some instances. For example, the user 103 may determine that a leaderboard or a scorecard will only be shared with the user's Facebook friends. In other implementations, such goals and performance metrics may be kept private.

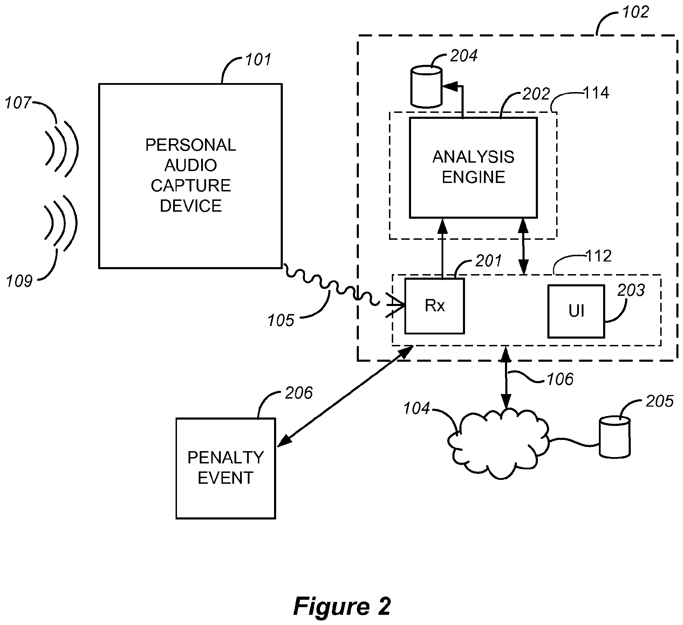

Figure 2 is a block diagram that shows an example of a PACD and examples of PAD components. As with other disclosed implementations, the types and numbers of elements shown in Figure 2 are merely examples. In this implementation, the PAD 102 includes an interface system 112 that includes a receiver module 201 and a user interface system 203, a control system 114 that includes an analysis engine 202, and a local storage system 204. The user interface system 203 may, for example, include a display of a smartphone or smartwatch on which a graphical user interface (GUI) may be presented according to instructions from the control system 114. In some examples, the user interface system 203 may include a touch screen provided on such a display.

In this example, the PACD 101 is shown capturing a user's speech 107 and environmental sounds 109, which may include speech from other people. According to this implementation, the PACD 101 and the PAD 102 are configured for wireless communication with one another via the data interchange connection 105. In other implementations, the PACD 101 and the PAD 102 may be configured for wired communication with one another, e.g., over a bus such as Ethernet or a universal serial bus (USB). According to this implementation, the PAD 102 is configured for communication with the cloud service 104, which manages the remote storage system 205, via the interface system 112 and the network connection 106.

In Figure 2, the PAD 102 is shown receiving microphone data from the PACD 101 via the receiver module 201. In some implementations, the received microphone data may be "raw," unprocessed microphone data, whereas in other implementations the received microphone data may have been processed, analyzed, etc., by the PACD 101 before transmission to the PAD 102. Some examples of the latter are provided below. The receiver module 201 may, for example, include a radio module, a demodulator, etc. In some examples, the receiver module 201 may include a device interface, such as a USB interface, for wired communication.

In some implementations, the analysis engine 202 may be capable of determining, based at least in part on the microphone data received from the PACD 101, instances of one or more acoustic events. In some examples, the acoustic events may include conversational dynamics data. According to some implementations, the analysis engine 202 may include speech detection functionality and/or automatic speech recognition functionality. According to some implementations, the analysis engine 202 may be capable of providing behavior modification feedback, via the interface system 112, corresponding with the instances of the one or more acoustic events.

In some examples, the analysis engine 202 may be capable of providing behavior modification feedback via the user interface system 203. According to some such implementations, the analysis engine 202 may be capable of providing audible behavior modification feedback via one or more speakers of the user interface system 203, e.g., in the form of a predetermined sound. In some implementations, the analysis engine 202 may be capable of providing audible behavior modification feedback in the form of multiple predetermined sounds, each of which corresponds with a selected acoustic event. In some examples, the analysis engine 202 may be capable of providing tactile or haptic behavior modification feedback via a motor or solenoid of the user interface system 203.

In the example shown in Figure 2, the analysis engine 202 is capable of providing behavior modification feedback via a penalty event engine 206, with which the analysis engine 202 is capable of communicating via the interface system 112. A user may, for example, configure the PAD 102 to trigger a remote penalty event via the penalty event engine when certain target acoustic events and/or acoustic event thresholds are detected. For example, if the user says "basically" more than 5 times in an hour, $10 may be automatically transferred from the user's bank account to a predetermined charity. In some examples, the penalty event engine may allow users to configure penalty events using a web-based tool such as IFTTT (see https://ifttt.com/wtf).

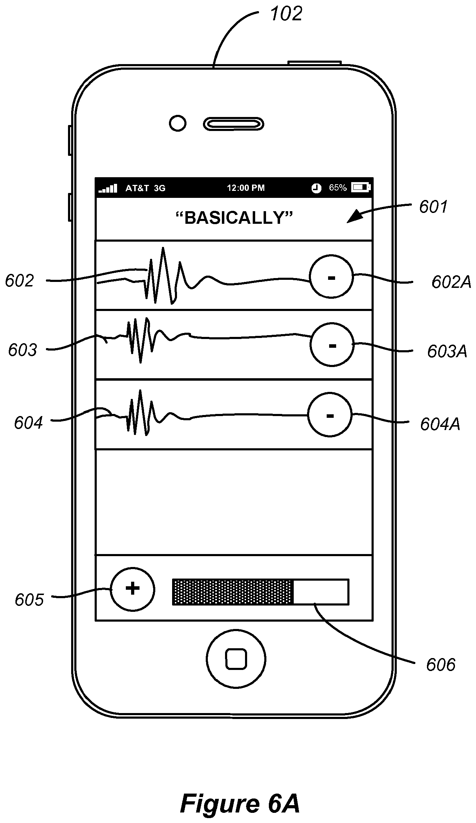

Accordingly, in some examples the analysis engine 202 may include keyword spotting functionality. For example, the analysis engine 202 may be capable of recognizing particular words that a user has indicated that he or she wants to track, e.g., via prior input to the user interface system 203. Such keyword spotting functionality may, in some examples, be implemented using a Hidden Markov Model-Gaussian Mixture Model (HMM-GMM) approach for speech recognition. Some such examples may include a separate model for each target word and a garbage model for all other speech and noise. The garbage model may, for example, be trained online by clustering large amounts of audio features captured by the PACD 101, so that a user's normal speech patterns are known. The word models may, for example, be trained by prompting the user to say a target word several times, e.g., between10 and 30 times. Some examples are described below with reference to Figure 6A-6D.

In some implementations, the analysis engine 202 may be capable of determining instances of laughter. Laughter has a unique, pulsating level signature that can be detected using a heuristic detector. According to some implementations, the analysis engine 202 may be able to determine instances of stuttering according to a characteristic type of pulsing level signature. In some examples, the analysis engine 202 may be able to determine instances of disfluencies, such as "um" or "ah." In some implementations, the analysis engine 202 may determine instances of disfluencies, stuttering and/or laughter according to a machine-learning-based approach, which may be similar to the HMM-GMM approach described above for word detection.

In some examples, the analysis engine 202 may be capable of level detection. According to some such examples, the analysis engine 202 may be capable of providing behavior modification feedback, via the interface system 112, when a level of the user's speech and/or a level of ambient noise is above a threshold level.

According to some implementations, the analysis engine 202 may be capable of determining a speech rate, e.g., of determining a user's speech rate. According to some such implementations, the analysis engine 202 may be capable of providing behavior modification feedback, via the interface system 112, when a rate of the user's speech is above a threshold level.

In some examples, the analysis engine 202 may be capable of estimating a pitch trajectory. For example, the analysis engine 202 may be capable of estimating a pitch trajectory in a user's speech. According to the present invention, the analysis engine 202 is capable of detecting instances of rising inflections in the user's speech. Further, the analysis engine 202 is capable of determining (or estimating) whether the user's speech corresponds to a question or to a statement, e.g., based on the results of an automatic speech recognition process. If the analysis engine 202 determines an instance of a rising inflections in the user's speech when the user is not asking a question, the analysis engine 202 provides behavior modification feedback, via the interface system 112.

According to some implementations, data regarding recent acoustic events may be stored in the local storage system 104, whereas data regarding less recent acoustic events may be stored in the remote storage system 205. For example, data regarding recent acoustic events of the past day, the past few days or the past week may be stored in the local storage system 104, and data regarding prior acoustic events may be stored in the remote storage system 205.

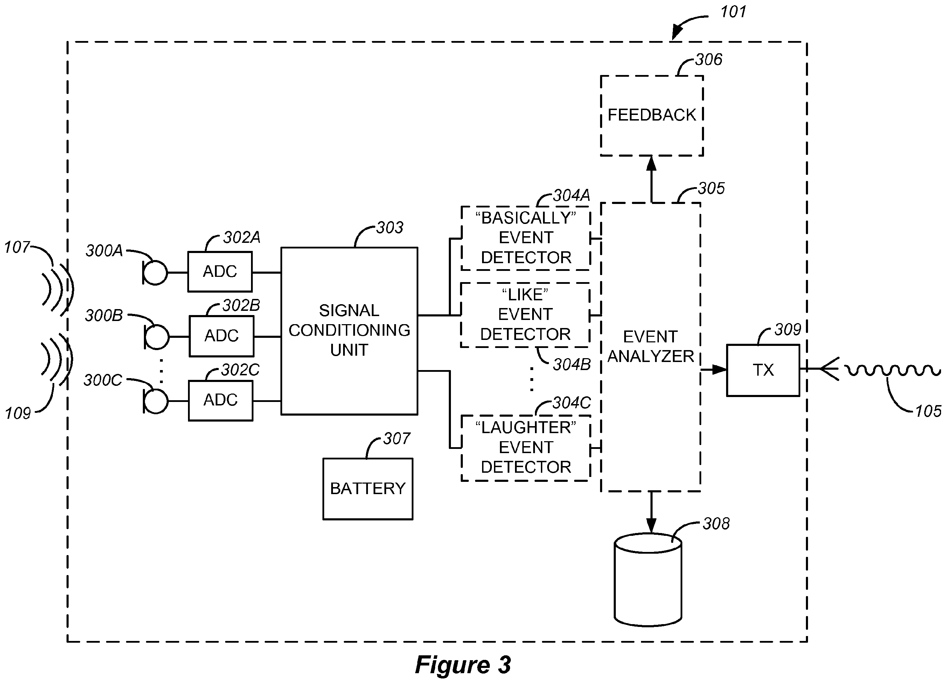

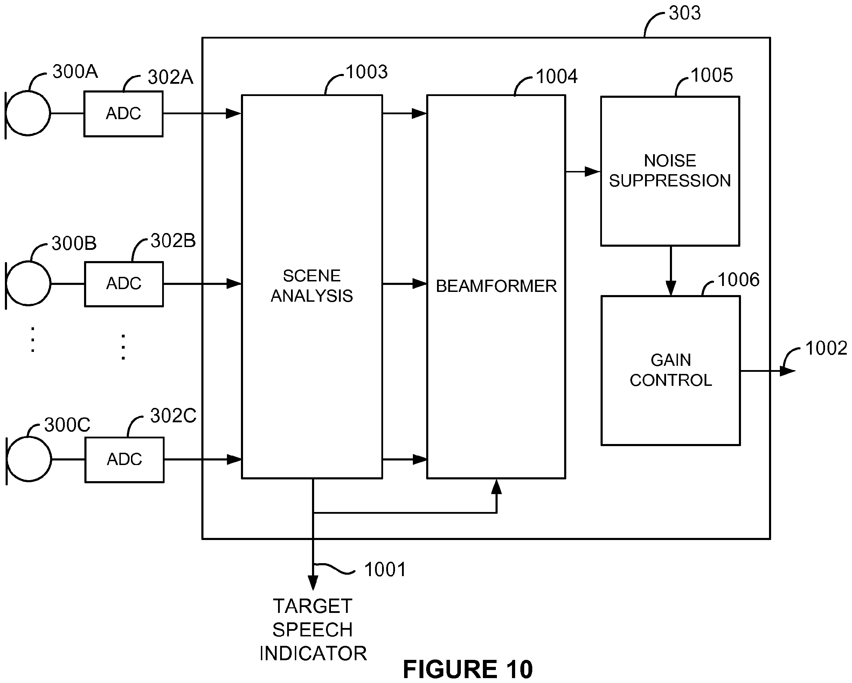

Figure 3 is a block diagram that shows example elements of a PACD according to one implementation. As with other disclosed implementations, the types and numbers of elements shown in Figure 3 are merely examples. Some alternative examples of the PACD 101 are shown in Figures 10-14 and are described below.

In this example, the PACD 101 is shown capturing a user's speech 107 and environmental sounds 109, which may include speech from other people, via microphones 300A-300C. Here, each of the microphones 300A-300C provides raw, analog microphone data to a corresponding one of the analog-to-digital converters 302A-302C.

According to this example, each of the analog-to-digital converters 302A-302C provides digitized microphone data to the signal conditioning unit 303. In some examples, the signal conditioning unit 303 may include a digital signal processor (DSP) configured for running software designed for automatic gain control (AGC), noise suppression, reverberation suppression and/or dynamic range compression (DRC). The signal conditioning unit 303 may, in some implementations, be capable of extracting acoustic features from the digitized microphone data. The acoustic features may, for example, include spectral band powers, Mel-frequency cepstral coefficients (MFCCs) and/or linear predictive coding (LPC) coefficients for downstream use. In some examples, such acoustic features may be provided to the PAD 102, e.g., via the data interchange connection 105.

In this implementation, the PACD 101 includes various optional blocks, including optional event detectors 304A-304C, an optional event analyzer 305 and an optional feedback engine 306. If not present in the PACD 101, in some implementations these blocks may instead reside in another device, such as in the PAD 102 or in a cloud-based device.

In this example, the event detector 304A is a detector for the keyword "basically" and the event detector 304B is a detector for the keyword "like." For example, the event detectors 304A and 304B may implement simple MFCC domain HMM-GMM models for a predetermined word trained from several utterances of the word by the user. The utterances may, for example, be made during a process of keyword selection by the user. According to this example, the event detector 304C is a laughter detector.

According to this implementation, the optional event detectors 304A-304C provide input to the optional event analyzer 305. The optional event analyzer 305 may, for example, be capable of managing the storage and transmission of acoustic event data or other microphone data. For example, the event analyzer 305 may cause acoustic event data or other microphone data to be stored in the local storage system 308. In some such examples, the acoustic event data or other microphone data to be stored in the local storage system 308 only until transmission to the PAD 101 via the transmitter 309 and the data interchange connection 105. However, in alternative implementations such data may be stored for a longer time.

In this example, the optional event analyzer 305 is capable of determining, based at least in part on input from the optional event detectors 304A-304C, instances of one or more acoustic events. According to this implementation, the optional event analyzer 305 is capable of providing behavior modification feedback, via the optional feedback engine 306, corresponding with the instances of the one or more acoustic events. There may be at least two general classes of behavior modification feedback. One class may involve immediate feedback, or substantially immediate feedback, e.g., haptic feedback, audible feedback and/or visual feedback presented on a display. Accordingly, in some implementations the optional feedback engine 306 may be capable of providing haptic, audible or visual feedback. For example, optional feedback engine 306 may include a vibration motor, a speaker, a buzzer, a light, a display, etc. The optional feedback engine 306 may be regarded as a component of the interface system 112. Another general class of behavior modification feedback may involve a longer time frame, such as longer-term feedback using graphs, using counters corresponding to acoustic events during a predetermined time frame, etc. Some examples of longer-term feedback may involve automated transfers of cash to a predetermined charity.

In this example, the PACD 101 includes a battery 307. In some examples, the PACD 101 may be a wearable device and may be powered by a rechargeable battery, e.g., a battery that is configured to be charged by harvesting the energy of the user's movements while the user is wearing the PACD 101. In some examples, the PACD 101 may include a battery that is configured to be charged by other means, such as inductive charging, wired charging, charging via a solar panel, etc.

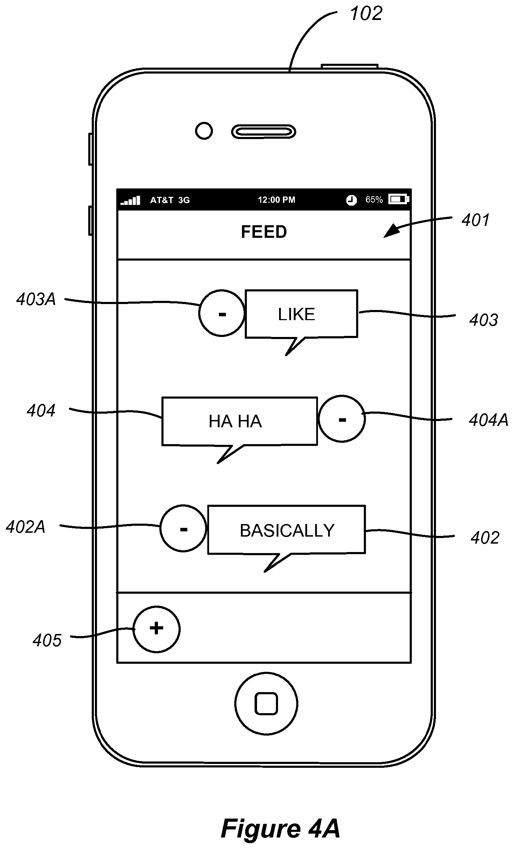

Figure 4A shows an example of a PAD displaying recently detected acoustic events. In this context, "recent" may, in some examples, correspond to "near-real-time" as described elsewhere herein. In this implementation, the PAD 102 is implemented via a smartphone. According to this example, the GUI 401 shown in the smartphone's display includes speech bubble icons 402 and 403, indicating that the keywords "basically" and "like" were hypothesized to have been uttered by the user recently. In some implementations, a time stamp may be shown to indicate how recently. The speech bubble icon 404 indicates a recent hypothesized occurrence of laughter.

According to this example, touching the speech bubble icon 402 causes playback of an audio clip corresponding to an utterance that was hypothesized to include the keyword "basically" and touching the speech bubble icon 403 causes playback of an audio clip corresponding to an utterance that was hypothesized to include the keyword "like." The audio clips may be played back via a speaker system of the PAD 102, via earbuds or headphones connected to the PAD 102, etc. In some such examples, the audio clip will include a short time (for example, 1 second, 2 seconds, etc.) before and after the hypothesized occurrence of the keyword, in order to provide context.

This implementation of the GUI 401 includes false positive buttons 402A, 403A and 404A. By touching the false positive button 402A, for example, a user can indicate to the PAD 102 that the detection of the word "basically" was a false positive detection. Likewise, by touching the false positive button 403A, a user can indicate to the PAD 102 that the detection of the word "like" was a false positive detection. These features may be used to interactively retrain, or bias, detectors for the selected keywords, which are detectors for the keywords "basically" and "like" in this example. Similarly, by touching the false positive button 404A, a user can indicate to the PAD 102 that the detection of laughter was a false positive detection.

In this example, the GUI 401 includes a false negative button 405. Touching the false negative button 405 indicates to the PAD 102 that one of the target acoustic events occurred within a predetermined time interval but has not been shown on the GUI 401. In some examples, the predetermined time interval may be selectable by the user. According to some examples, the predetermined time interval may be the last 20 seconds, the last 30 seconds, the last minute, the last 5 minutes, etc. In some such implementations, the PAD 102 may respond by displaying speech bubble icons corresponding to hypothesized recent acoustic events for which the PAD 102 (or the PACD 101) had a lower detection confidence. According to some such implementations, the user may be able to audition each of the events by touching the corresponding speech bubble icon. By identifying false negatives, a user may be able to interactively retrain, or bias, detectors for target acoustic events. In some such examples, the PAD 102 may display false positive buttons corresponding to the speech bubble icons. The user may be able to remove false positives using the accompanying false positive buttons.

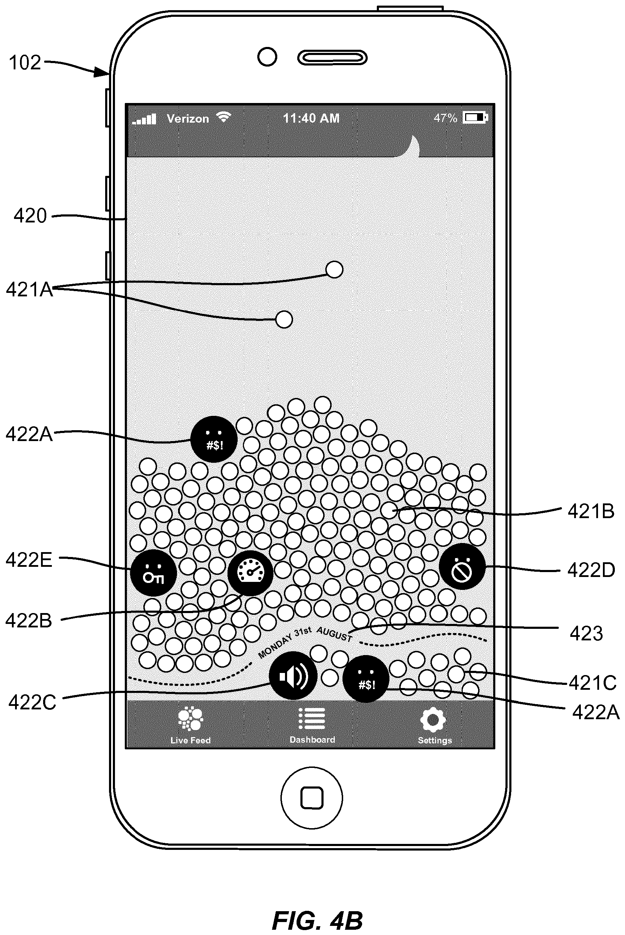

Figure 4B shows an alternative example of a PAD displaying recently detected acoustic events. In this example, the PAD 102 is capable of displaying recently detected acoustic events in near-real-time. In this implementation, the PAD 102 is implemented by a control system of a smart phone, e.g., via software being executed by the control system.

According to this example, the GUI 420 shown in the smartphone's display includes indicates detected acoustic events, represented as graphical icons. In this example, the icons that are relatively closer the top of the screen, such as the icons 421A, represent more recently detected acoustic events. In this example, the control system causes the icons to appear in near-real-time, moving vertically down the screen to gather towards the bottom of the screen. In some examples, the control system may automatically cause older collected icons to be moved down, and eventually to be moved off-screen, over time. By interacting with the GUI 420 (e.g., by touching areas of the smart phone's display), a user may select icons representing acoustic events. For example, touching an icon may cause playback of the corresponding acoustic event. According to some implementations, touching an icon may invoke another GUI, such as a GUI that is similar to the GUI 401 shown in Figure 4A. In some examples, the control system may, in response to user interaction with the GUI 420, cause the display to scroll down to view and interact with the icons representing acoustic events that were detected at an earlier time and previously moved off-screen.

According to this implementation, some icons are represented in a characteristic pattern, color, etc., corresponding to a particular type of acoustic event. In this implementation, icons with facial features represent what the speaker says or utters (such as detected words and laughter) and other types of icons represent how the user speaks (such as how loud or how fast the user speaks). Here, for example, the emoji icons 422A indicate recent hypothesized occurrences of a target swear word. In this implementation, the speedometer icon 422B indicates a recent hypothesized occurrence of the user speaking at a rate that is above a threshold defined by the user or by the PAD 102. In this instance, the volume icon 422C indicates a recent hypothesized occurrence of the user speaking at a volume outside of a threshold defined by the user or by the PAD 102. According to this example, the emoji icons 422D indicate recent hypothesized occurrences of filler words and/or sounds such as "actually," "like," "yknow," etc. In this implementation, the emoji icons 422E indicate recent hypothesized occurrences of permission words such as "sorry," "just," etc. In this example, "blank" icons such as the icons 421A, 421B and 421C represent acoustic events for which the PAD 102 does not have a hypothesis, and/or acoustic events that the PAD 102 is not configured to detect. Other implementations may represent acoustic events in a variety of other ways.

In this implementation, the GUI 420 includes a graphical delineation 423 to visually separate icons that represent acoustic events. In this example, the graphical delineation 423 indicates a temporal separation of icons, e.g., according to the day on which the corresponding acoustic events were detected. In other implementations, the PAD 102 or the user may configure the system to delineate events by hour, work hours, week, etc.

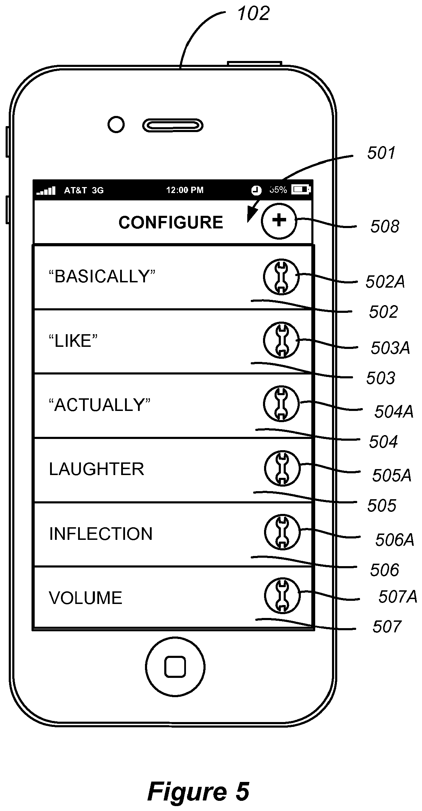

Figure 5 shows an example of a GUI for configuring target acoustic events and related parameters. In this implementation, the GUI 501 shows examples of acoustic events that a user has previously indicated a desire to track. For example, the "basically" keyword entry 502 indicates that the user has previously configured the PAD 102 to log utterances of the keyword "basically." Similarly, the "like" keyword entry 503 and the "actually" keyword entry 504 indicate that the user has previously configured the PAD 102 to log utterances of these keywords. The laughter detection entry 505, the rising inflection entry 506 and the volume entry 507 indicate that the user has previously configured the PAD 102 to log instances of the user's laughter, of rising speech inflections (which may include, but are not limited to, rising speech inflections at the end of the user's non-questions) and of the user's excessively loud speech.

According to this example, the GUI 501 includes configuration buttons 502A-507A, corresponding to each of the above-described entry buttons. A user may, for example, touch the "basically" keyword configuration button 502A to configure and/or retrain the "basically" event. Some examples are described below with reference to Figure 6A.

In this implementation, the GUI 501 includes a new target event button 508. In this example, a user can touch the new target event button 508 to configure the PAD 102 to log a new type of acoustic event that is not currently being logged.

Figure 6A shows an example of a GUI for training and configuration of a keyword detector for a particular keyword. A user may interact with the GUI 601 to train the PAD 102 (and, in some instances, the PACD 101) to recognize how the user pronounces a particular target keyword by giving a number of examples.

In this example, the GUI 601 is for training and configuration of a keyword detector for the keyword "basically." Waveforms displays 602-604 correspond with three of a user's utterances of the keyword "basically" during a training session. In this example, the PAD 102 is configured to play an audio clip of an utterance if the user touches one of the corresponding waveform displays. For example, if the user touches the waveform display 602, the PAD 102 will play an audio clip of a first utterance of the keyword "basically."

According to this implementation, a user may delete a recorded training utterance by interacting with one of the corresponding training utterance removal buttons 602A-604A. For example, if the user touches the training utterance removal button 602A, the PAD 102 will delete the utterance of the keyword "basically" corresponding to the waveform display 602.

In this example, the GUI 601 includes an "add training utterance" button 605. When a user touches the add training utterance button 605, the PAD 102 will capture a new training utterance via a microphone system of the PAD 102, via an auxiliary microphone system, etc., and will record the new training utterance. In this implementation, the GUI 601 will be updated to provide a new waveform display and a new training utterance removal button for the new training utterance. In some instances, a user may be informed (e.g., via a prompt on a display of the PAD 102 and/or via an audio prompt) that training utterances should be recorded in a quiet place and spoken with a variety of intonations.

According to this implementation, the GUI 601 includes a completion indicator 606. In some implementations, the completion indicator 606 indicates how well-trained the detector is for this keyword. Keyword detectors may require a certain number of training vectors to be able to reliably detect their given keyword. Alternatively, or additionally, the completion indicator 606 may indicate the discriminative power of the keyword model, built from the displayed training utterances, over the other keyword models and a background garbage model. Accordingly, the completion indicator 606 may show when the user has recorded enough training utterances for the keyword to be reliably detected.

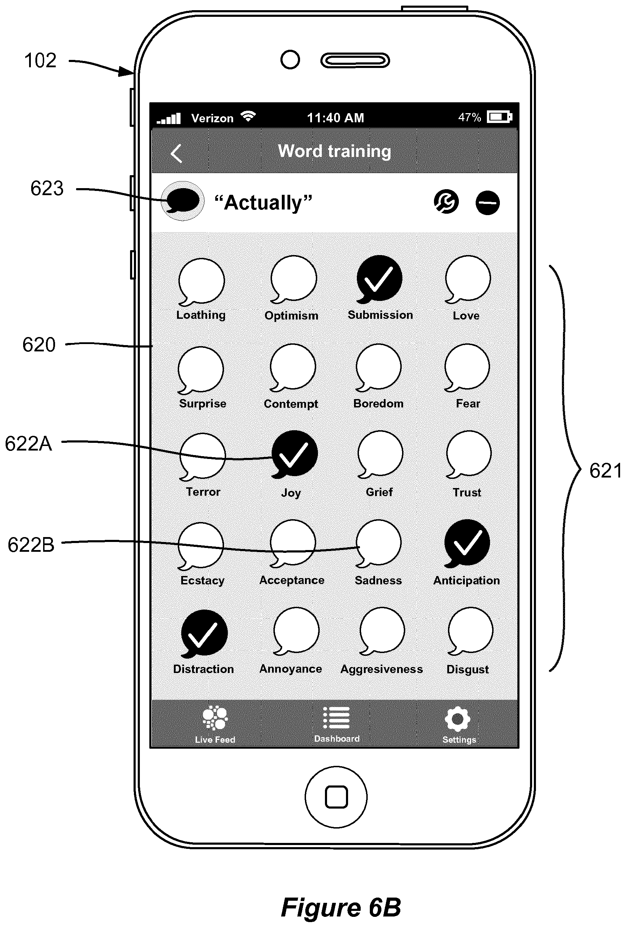

Figure 6B shows an alternative example of a GUI for training and configuration of a keyword detector for a particular keyword. In this example, the PAD 102 is being implemented by a mobile device. Here, a user has previously interacted with the PAD 102 in order to select a GUI 620 to facilitate the training and configuration of a keyword detector for the keyword "actually," as indicated in the keyword field 623.

According to this example, the GUI 620 is configured to assist the capture of a set of training utterances with a variety of intonations. In this instance, the GUI 620 is presenting a plurality of fields 621 that are intended to prompt the user to utter the keyword with a variety of intonations. In this diagram, the fields 621 are annotated with text representing emotions. However, in alternative implementations the GUI 620 may present other types of visual representations, such as emoji, animated characters, etc. In some examples, the GUI 620 may present visual representations in colors corresponding to emotion and/or intonation types.

In this example a field 621 that includes a check mark indicates that a corresponding utterance has previously been recorded. For instance, the check mark 622A, annotated with the word "Joy", indicates that the PAD 102 has captured at least one instance of the user's utterance of the keyword "actually" in response to a prompt relating to joy. In some such examples, the user may have been prompted with media related to joy, such as a photograph of a person expressing joy and/or a playback of a recording of cheering sounds or laughter. In some examples, the user may have been prompted by playback of a recording of a person saying the keyword "actually" with a joyous tone of voice.

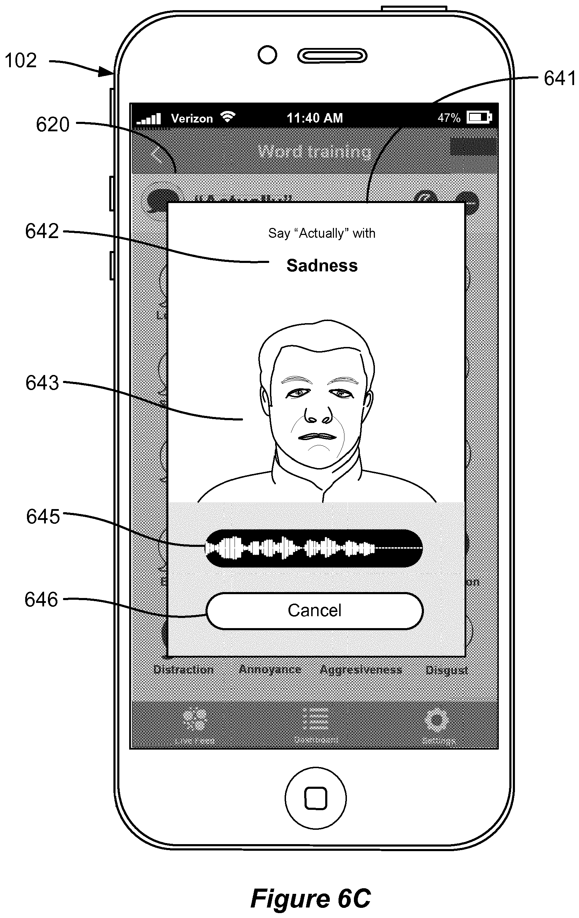

According to this implementation, a field 621 that does not include a check mark indicates that a corresponding utterance has not previously been recorded. For instance, the blank area 622B that is un-checked, annotated with the word "Sadness," indicates that the user has not captured the keyword "actually" while being presented with a "Sadness" prompt. In some examples, if the user touches an un-checked field, a GUI such as that shown in Figure 6C may be displayed to present the user with media corresponding to the un-checked field's prompt, and a control system of the PAD 102 may initiate the capture of the keyword utterance.

Figure 6C shows another example of a GUI for training and configuration of a keyword detector for a particular keyword. In this example, the GUI 641 is designed to facilitate the capture of a training utterance during the training and configuration of a keyword detector for a particular keyword, in this example the keyword "actually." In some implementations, the GUI 641 may be invoked from another keyword training and configuration GUI. According to this example, the GUI 641 can be invoked from, and is shown displayed on top of, the GUI 620 shown in Figure 6B. The GUI 641 may be displayed when the user touches an un-checked field of the GUI 620, for example the blank area 622B of the GUI 620.

In this example, the GUI 641 includes a text prompt field 642 and a visual prompt field 643, both of which are intended to provoke the user to provide an utterance of the keyword undergoing training with an intonation that is distinct from previously-captured utterances of the same keyword. According to this example, text prompt field 642 and a visual prompt field 643 are prompting the user to utter the keyword "actually" with the emotion sadness. In other implementations, the user may be prompted with different text or a different media type, such as audio. In this example, the GUI 641 includes a real-time waveform rendering 645 of the user's captured utterance of the keyword under training, so as to provide feedback when the user is uttering the keyword undergoing training. Here, the GUI 641 also includes a cancel button 646, which allows the user to return to the keyword training and configuration GUI 620.

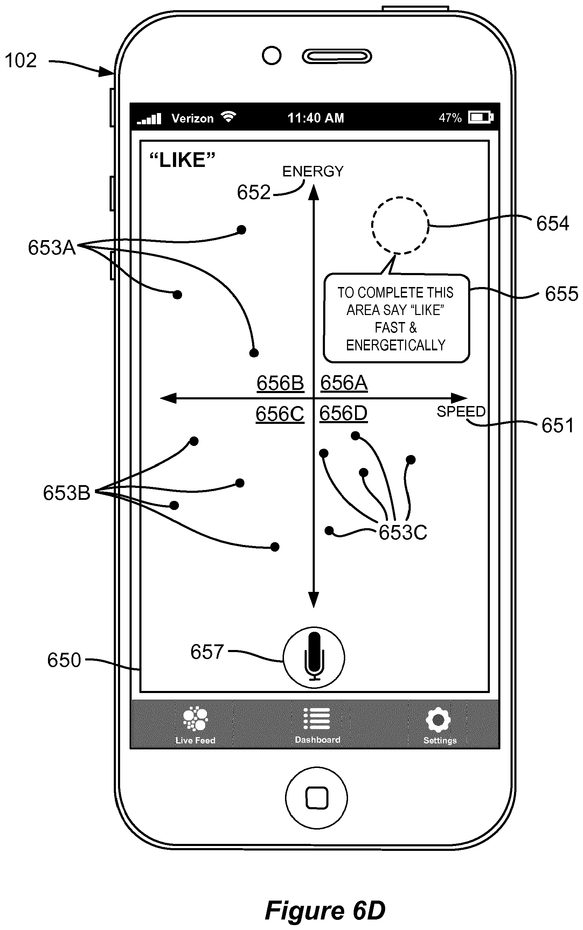

Figure 6D shows another example of a GUI for training and configuration of a keyword detector for a particular keyword. Here, the PAD 102 is shown being implemented by a mobile device. In this example, the GUI 650 includes a two-dimensional (2D) graph representing distinct characteristics of speech, which in this example are speed (indicated via axis 651) and energy (indicated via axis 652). In other implementations, these axes could represent other characteristics of audio or speech and/or be labeled differently. For example, in another implementation the axis 652 may represent loudness or pitch variance. In other implementations the graph may have a third axis that represents loudness, pitch variance or an additional speech characteristic.

In this example, reference numerals 656A-656D correspond with quadrants of the 2D graph. According to this example, the quadrants 656A-656D are populated by icons 653A-653C, which indicate previously-captured training utterances. In some implementations, the quadrants 656A-656D may be displayed differently based on the captured utterances' contained in the quadrant. For example, the background color may indicate if the number and variation of captured utterances contained in a quadrant is determined to be sufficient for keyword detection by the PAD 102 (e.g., a green background may indicate sufficiency and gray background may indicate insufficiency).

The positions of the icons 653A-653C correspond with the audio characteristics of the captured utterances. In this example, the utterance icons 653A indicate utterances that have been determined to be low in speed and high in energy; the utterance icons 653B indicate utterances that have been determined to be low in speed and low in energy; and the utterance icons 653C indicate utterances that have been determined to be low in energy and high in speed. In some examples, touching any of the utterance icons 653A-653C may initiate playback of the corresponding utterance. Touching and dragging any of the utterance icons 653A-653C off of the 2D graph may, for example, cause a captured utterance to be removed from this training set.

According to this example, the area 654 is an area on the 2D graph with a low number of captured utterances. In this example, the area 654 corresponds to speech that is high in speed and high in energy. Here, the prompt 655 is an example of a text-based bubble for prompting a user to capture a new training utterance with specific characteristics in order to populate a particular area of the graph, in order to accumulate a set of training utterances that is varied in intonation. In some implementations, the prompt 655 may be accompanied with (or replaced by) additional media to facilitate the user intonating in the required manner, e.g., in this example, an audio clip of someone speaking quickly and energetically.

In this example, the GUI 650 includes an "add training utterance" button 657. According to this example, when a user touches the add training utterance button 657, a control system of the PAD 102 will cause a new training utterance to be captured via a microphone system of the PAD 102, via an auxiliary microphone system, etc., and will record the new training utterance. According to this implementation, a control system of the PAD 102 will cause a new utterance icon will be placed on the 2D graph after the new training utterance is captured. In this example, the position of new utterance icon will be based on the graphed audio/speech characteristics of the new training utterance.

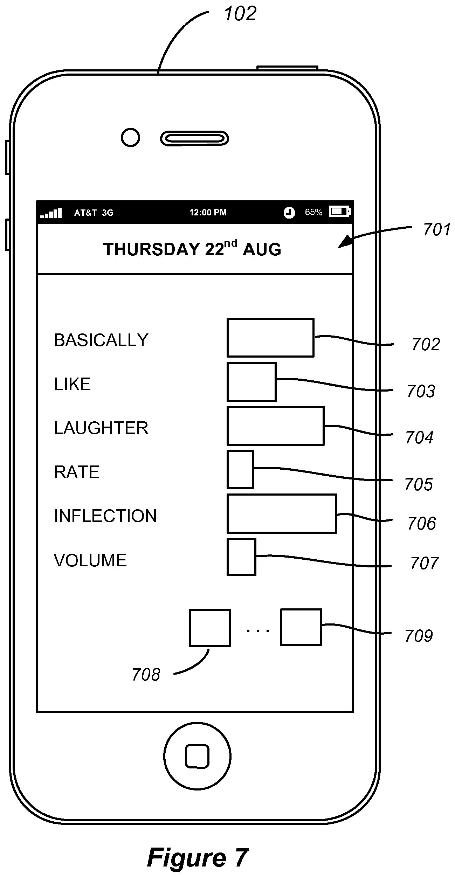

Figure 7 shows an example of a GUI for providing a summary of target acoustic event detection. In this example, the GUI 701 is providing a summary for the current day, but in other examples the summary could cover a different time period, e.g., the last hour, the last conversation, the last week, etc. In this example, fields 702 and 703 provide a summary for the target keywords "basically" and "like," respectively. In some examples, fields 702 and 703 may indicate a number of instances during which the target keywords "basically" and "like" were detected during the time interval. In alternative implementations, fields 702 and 703 may indicate a rate at which the target keywords "basically" and "like" were detected during the time interval, e.g., an hourly rate at which the target keywords "basically" and "like" were detected during the time interval.

In this example, the field 704 may indicate a number of instances during which laughter was detected during the time interval, or a laughter rate during the time interval. Here, the field 705 provides information regarding the user's speech rate during the time interval. In some instances, the field 705 may indicate mean, upper quartile and/or maximum speech rate. In some examples, the speech rate may be expressed in units of syllables/second, words/minute, etc.

According to embodiments of the invention, the GUI 701 also includes fields 706 and 707, which provide summaries for rising inflection and volume acoustic events, respectively. In some examples, the field 706 may indicate mean, upper quartile and/or maximum rising inflection rate. In some instances, the rising inflection rate may be expressed in units of instances/minute, instances/hour, instances/conversation, etc. According to some implementations, the field 707 may indicate mean, upper quartile and/or maximum speech volume level in dB. In some implementations, the field 707 may indicate categories of typical speaking volumes, such as a range of typical whispering volumes, a range of typical conversational volumes, a range of typical raised voice volumes, a range of typical shouting volumes and/or a range of typical screaming volumes.

In this example, the GUI 701 includes social media integration buttons 708 and 709. A user may interact with social media integration buttons 708 and 709 to share some, or all, of the current acoustic event summary using social media services such as Twitter, Facebook, LinkedIn, Foursquare, etc. In some implementations, the GUI 701 (or another GUI) may facilitate competition between other users, e.g., by indicating an acoustic event score of one or more other users. Some such competitions may be based on determining who can avoid using certain keywords, whereas others may be based on determining who can use certain keywords the most.

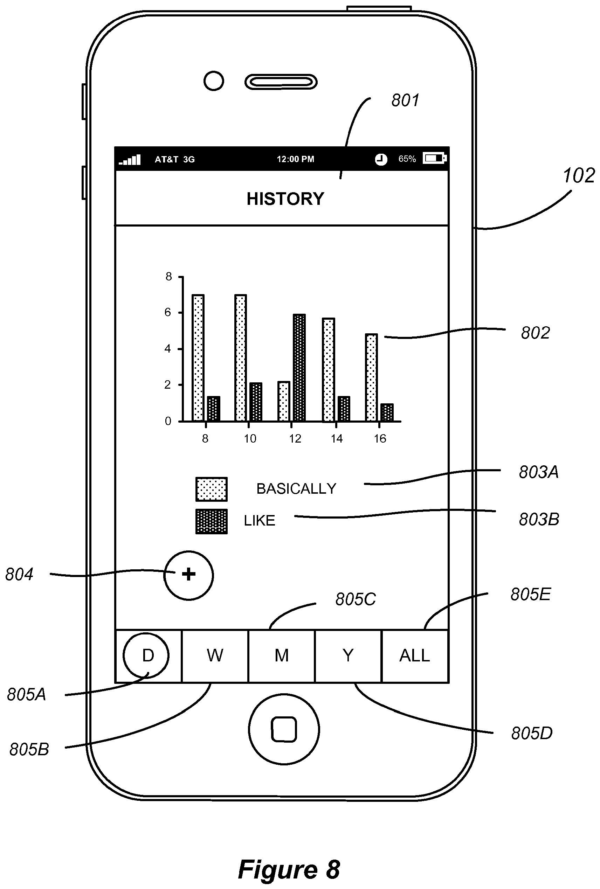

Figure 8 shows an example of a GUI for providing a detailed log history of target acoustic event detection in a graphical form. According to this example, the GUI 801 includes a graph 802, which is a histogram of utterance of keyword "basically" vs keyword "like" by weekday hour. It can be seen, for example, that the user utters "like" predominantly when meeting his or her friends for lunch, but tends to overuse the word "basically" during morning and afternoon meetings. The legend fields 803A and 803B indicate the shading corresponding to instances of the keywords "basically" and "like," respectively, in graph 802. In this example, a user may touch the event addition button 804 to add another acoustic event type to the graph 802.

According to this example, fields 805A-805D are timescale selectors for the graph 802. In this example, the field 805A is a day timescale selector, the field 805B is a week timescale selector, the field 805C is a month timescale selector and the field 805D is a year timescale selector.

Here, the GUI 801 also includes a graph selector field 805E. A user may touch the graph selector field 805E in order to select a graph type from a menu of various possibilities. Some examples of selectable graphs and charts include:
- Acoustic events by location. Such a graph may help a user determine which keywords the user tends to say more at work, at home, at the gym, etc.
- Acoustic events over a selected or predetermined time period.
- A pie chart showing the relative frequency of keywords during a selected or predetermined time period.
- A projection of expected rate of hearing loss based on noise exposure encountered during a selected or predetermined time period.
- An acoustic event timeline indicating an interaction category (e.g., this section of speech is a one-on-one conversation, an argument, a monologue/presentation, a group discussion, etc.).

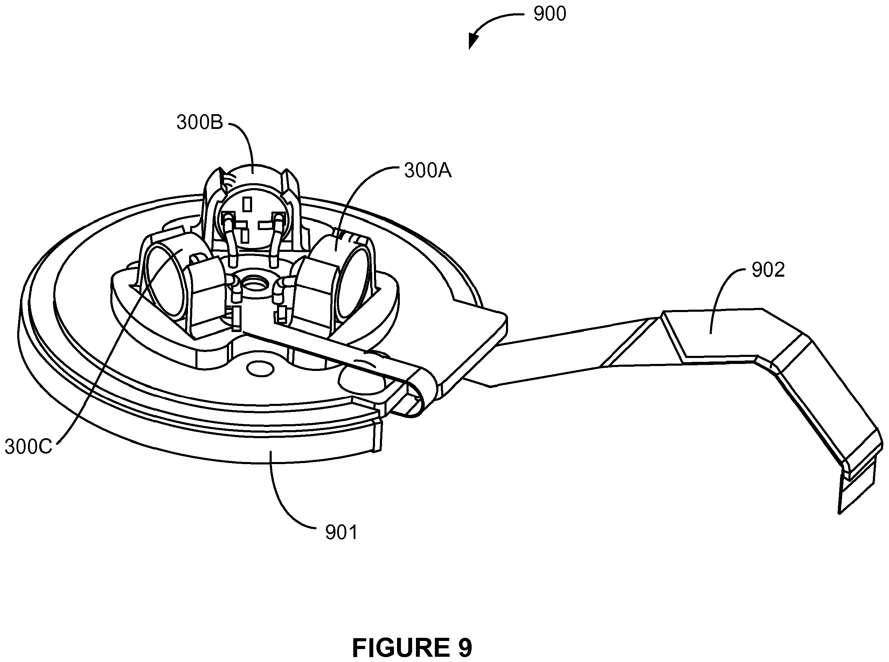

Figure 9 shows an example of a microphone array for a PACD which is not according to the present invention. In this example, the microphone array 900 includes directional microphones 300A-300C, each of which points in a different direction. In this implementation, the directional microphones 300A-300C are miniature cardioid electret condenser microphones. Here, the microphone array 900 includes a microphone array mounting bracket 901 and a flat flex connector cable 902 for connecting the directional microphones 300A-300C to a corresponding one of analog-to-digital converters (ADCs) 302A-302C, such as those shown in Figure 10.

Figure 10 is a block diagram that shows example elements of a signal conditioning unit for a PACD which is not according to the present invention. Figure 10 also shows directional microphones 300A-300C, each of which is configured for communication with a corresponding one of the ADCs 302A-302C. In this example, the signal conditioning unit 303 includes a scene analysis unit 1003, a beam former unit 1004, a noise suppression unit 1005 and a gain control unit 1006.

In this example, the signal conditioning unit 303 is capable of providing target speech indicator output 1001. The target speech indicator output 1001 may, for example, be asserted whenever the scene analysis unit 1003 estimates that there is target speech (for example, speech from the wearer of the device instead of from a third party). The target speech indicator output 1001 may, for example, be used to control which audio is recorded and/or which audio is a candidate for downstream analysis. In some implementations, the downstream analysis may be performed by the PACD 101, e.g., by the plurality of detector units 304A-304C shown in Figure 3 and described above. Alternatively, or additionally, the downstream analysis may be performed by a PAD 102 and/or by another device, such as a cloud-based service. In some embodiments the target speech indicator output 1001 may can be a variable quantity (such as a continuously variable quantity or a piecewise-continuous variable quantity) indicating the probability of target speech. The target speech indicator output 1001 may, for example, be stored with audio that is recorded, so that speech that is estimated to be more likely to have been uttered by the target speaker (e.g., the wearer of the PACD 101) is more likely to appear in any summary playback, report or graph.

According to this implementation, the scene analysis unit 1003 is capable of estimating when speech from the target speaker is present by analyzing the digitally sampled microphone signals provided by the ADCs 302A-302C. In some examples, the scene analysis unit 1003 may implement scene analysis methods such as those disclosed in United States Provisional Application No. 62/293,104, entitled "System and Method for Spatial Processing of Soundfield Signals" and filed on February 9, 2016.

In some examples, the scene analysis unit 1003 may employ time-windowed normalized covariance analysis methods. According to some such examples, the scene analysis unit 1003 may assert that there is speech during segments of time during which the covariance (which may be computed over some suitable time window of recent samples, such as 10ms, 20ms, 50ms, 100ms, etc.) is sufficiently close to a stored prototype covariance. In some embodiments, the target speech indicator output 1001 may represent a continuous probability that there is target speech based on the closeness of the current covariance to the stored prototype.

According to some implementations, the beam former unit 1004 may be capable of attenuating sound arriving from directions other than the prototype direction, which may be an assumed direction of the user's mouth. For example, in the case of a chest-worn brooch implementation of the PACD 101, the assumed direction of the user's mouth may be a direction above the PACD 101. In some examples, the beam former unit 1004 may implement beam forming methods such as those disclosed in PCT Patent Application No. PCT/US2015/038866, entitled "Auxiliary Augmentation of Soundfields" and filed on July 1, 2015.

According to some implementations, the beam former unit 1004 may be capable of implementing beam forming methods such as a fixed delay-and-sum linear beam former. Alternatively, or additionally, some examples of the beam former unit 1004 may be capable of implementing more complex adaptive beam former arrangements such as generalized sidelobe cancellers or frequency domain adaptive suppressors. In this example, the beam former unit 1004 uses output from the scene analysis unit 1003, for example to temporarily disable adaption during times when the presence of target speech is estimated to be unlikely.

The optional noise suppression unit 1005 may be capable of implementing various noise suppression methods, depending on the particular implementation. According to some examples, the noise suppression unit 1005 may be capable of attenuating non-speech sounds.

In this example, the gain control unit 1006 is capable of applying an automatic gain control process before the digital audio output 1002 is output from the signal conditioning unit 303. The gain control unit 1006 may be capable of controlling the gain such that target speech is at a uniform level, or a substantially uniform level, for downstream analysis. The gain control unit 1006 may, in some instances, make use of the target speech indicator output 1001 in order to determine when to adapt, e.g., to attenuate, non-target speech.

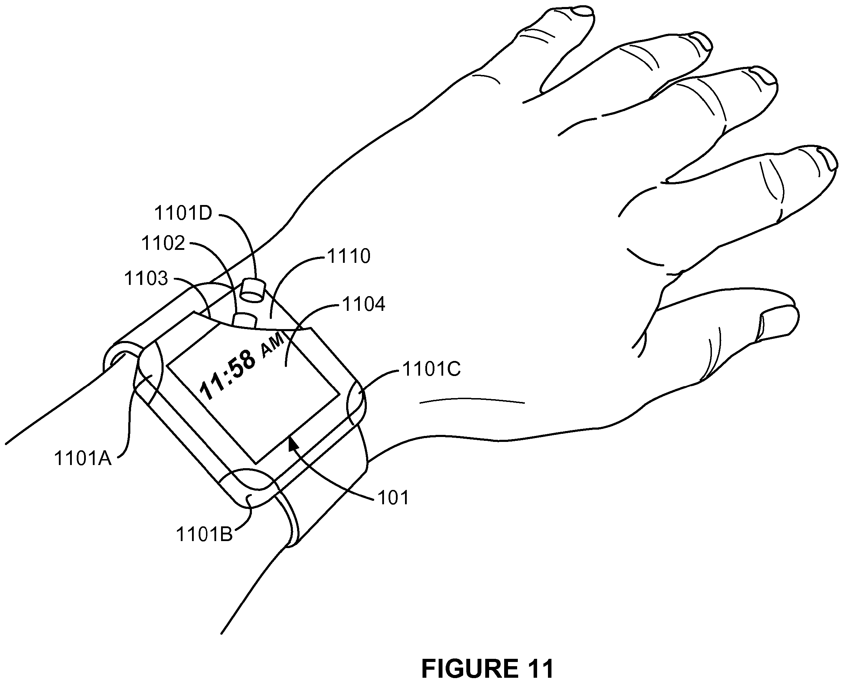

Figure 11 shows an example of a PACD in a wristwatch form factor which is not according to the present invention. In this example, the PACD 101 includes microphones 1101A-1101D, one at each of the four corners of the device. The microphones 1101A-1101D may, for example, be cardioid electret condenser microphones. Microphones 1101A-1101C are shown covered with a protective grill. Microphone 1101D is shown here as part of a cut-away view 1103, mounted on a circuit board 1110.

In this implementation, the PACD 101 includes an inertial measurement unit 1102. The inertial measurement unit 1102 may include one or more types of inertial sensors, for example, one or more gyroscopes, accelerometers, and/or magnetometers. The inertial measurement unit 1102 may be capable of estimating the orientation of the PACD 101. Feedback from the inertial measurement unit 1102 may, for example, be input to the scene analysis unit 1003 to correct for movement of the wearer's hand relative to his or her mouth and/or relative to background noise sources.

In this example, the PACD 101 includes a display 1104 on which the time is being displayed. In some implementations, the display 1104 may have an associated touch sensor system or a gesture detection system. For example, the display 1104 may have a touch screen disposed thereon. In some such implementations, the display 1104 and the touch or gesture detection system may be a component of a user interface system for the PACD 101. According to some examples, the PACD 101 may be capable of providing GUIs such as those disclosed herein.

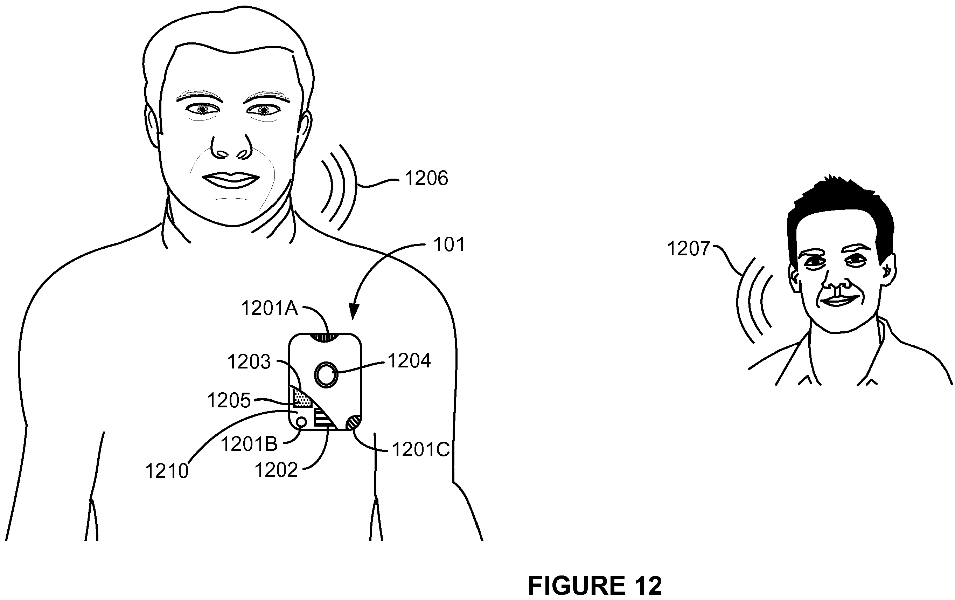

Figure 12 shows an example embodiment of the PACD in a brooch form factor which is not according to the present invention. In Figure 12, the PACD 101 is shown being worn on a user's upper body. For example, the PACD 101 may be attached to the wearer's clothing by a clip.

In this example, the PACD 101 includes microphones 1201A-1201C, which may be cardioid electret condenser microphones in some implementations. According to this example, the microphones 1201B and 1201C reside at the bottom corners of the PACD 101 and the microphone 1201A is positioned closer to the wearer's mouth, at the top of PACD 101. Having the microphone 1201A positioned closer to the wearer's mouth may assist in discriminating the wearer's speech 1206 from other speech 1207. Microphones 1201A and 1201C are shown covered with a protective grill. Microphone 1201B is shown here as part of cut-away view 1203, mounted on the circuit board 1210.

In this implementation, the PACD 101 includes an inertial measurement unit 1202. The inertial measurement unit 1202 may include one or more types of inertial sensors, for example, one or more gyroscopes, accelerometers, and/or magnetometers. The inertial measurement unit 1202 may be capable of estimating the orientation of the PACD 101. Feedback from the inertial measurement unit 1202 may, for example, be input to the scene analysis unit 1003 to correct for the orientation of the PACD 101 and/or to detect removal of the PACD 101, so as to adjust or disable scene analysis.

In this example, the PACD 101 includes a display 1204. In some examples the display 1204 may display information from other components of the PACD 101. For example, the display 1204 may include an LED. A control system of the PACD 101 may control the LED to flash as an indication of target speech detected in near-real-time. The indication of target speech may, for example, be via target speech indicator output 1001 provided by the signal conditioning unit 303. According to some examples, a control system of the PACD 101 may control the display 1204 to indicate a visual indication of the relative position of the PACD 101 to the wearer's mouth, e.g., based on input from an external camera.

In this implementation, the PACD 101 includes a feedback unit 1205. The feedback unit 1205 may be capable of providing behavior modification feedback corresponding with detected instances of target acoustic events. The feedback unit 1205 may, for example, include a speaker and/or a pico vibration motor. A control system of the PACD 101 may be capable of controlling the feedback unit 1205 to notify the wearer of target acoustic events in near-real-time.

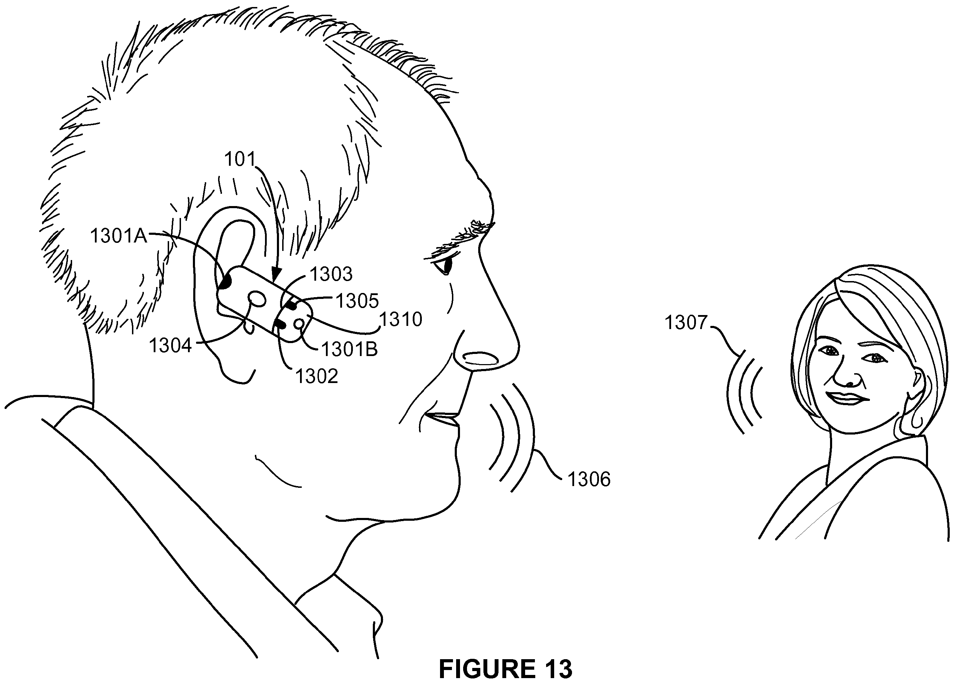

Figure 13 shows an example embodiment of a head-mounted PACD which is not according to the present invention. In this example, the PACD 101 includes microphones 1301A and 1301B. In this example, the microphones 1301A and 1301B reside at opposite ends of the PACD 101. Microphone 1301A is shown covered with a protective grill. Microphone 1301B is shown here as part of cut-away view 1303, mounted on a circuit board 1310.

In this implementation, the PACD 101 includes an inertial measurement unit 1302. The inertial measurement unit 1302 may include one or more types of inertial sensors, for example, one or more gyroscopes, accelerometers, and/or magnetometers. The inertial measurement unit 1302 may be capable of estimating the orientation of the head-mounted PACD 101. Feedback from the inertial measurement unit 1302 may, for example, be input to the scene analysis unit 1003 to correct for the orientation of the PACD 101 and/or to detect removal of the PACD 101, so as to adjust or disable scene analysis.

In this example, the PACD 101 includes a display 1304. In some examples the display 1304 may display indications of information from other components of the PACD 101, e.g. as described above.

In this implementation, the PACD 101 includes a feedback unit 1305. The feedback unit 1305 may be capable of providing behavior modification feedback corresponding with detected instances of target acoustic events. The feedback unit 1305 may, for example, include a speaker and/or a pico vibration motor. A control system of the PACD 101 may be capable of controlling the feedback unit 1305 to notify the wearer of target acoustic events in near-real-time.

Various modifications to the implementations described in this disclosure may be readily apparent to those having ordinary skill in the art. The general principles defined herein may be applied to other implementations. Thus, the claims are not intended to be limited to the implementations shown herein.

## Claims

1. An apparatus, comprising:
an interface system; and
a control system capable of:
receiving, via the interface system, microphone data;
determining, based at least in part on the microphone data, instances of one or more acoustic events, wherein the instances of one or more acoustic events include conversational dynamics data, wherein determining an instance of an acoustic event involves:
- determining an instance of a rising inflection in a user's speech;
- determining whether the user's speech corresponds to a question or to a statement; **characterised by**
providing behavior modification feedback, via the interface system, if an instance of a rising inflection is determined in the user's speech when it is determined that the user's speech does not correspond to a question.

2. The apparatus of claim 1, wherein determining an instance of an acoustic event additionally
involves determining an instance of exceeding a conversational dominance metric that is based, at least in part, on a fraction of total speech uttered by a dominant conversation participant during a time interval.

3. The apparatus of claim 2, wherein the conversational dominance metric is based, at least in part, on one or more indications of a conversation participant interrupting another conversation participant.

4. The apparatus of any one of claims 1-3, wherein determining an instance of an acoustic event additionally
involves determining an instance of at least one acoustic event from a list of acoustic events consisting of: stuttering and disfluency.

5. The apparatus of any one of claims 1-4, wherein determining an instance of an acoustic event additionally
involves determining an instance of ambient noise that is above an ambient noise threshold.

6. A non-transitory medium having software stored thereon, the software including instructions for controlling one or more devices to perform a method of providing behavior modification feedback, the method comprising:
receiving microphone data;
determining, based at least in part on the microphone data, instances of one or more acoustic events, wherein the instances of one or more acoustic events include conversational dynamics data, wherein determining an instance of an acoustic event involves:
- determining an instance of a rising inflection in a user's speech;
- determining whether the user's speech corresponds to a question or to a statement; **characterised by**
providing behavior modification feedback if an instance of a rising inflection is determined in the user's speech when it is determined that the user's speech does not correspond to a question.

7. A method of providing behavior modification feedback, the method comprising:
receiving, by a control system, microphone data;
determining, by the control system and based at least in part on the microphone data, instances of one or more acoustic events, wherein the instances of one or more acoustic events include conversational dynamics data, wherein determining an instance of an acoustic event involves:
- determining an instance of a rising inflection in a user's speech;
- determining whether the user's speech corresponds to a question or to a statement; **characterised by**
providing behavior modification feedback, via an interface system, if an instance of a rising inflection is determined in the user's speech when it is determined that the user's speech does not correspond to a question.

## Patentansprüche

1. Einrichtung, umfassend:
ein Schnittstellensystem; und
ein Steuersystem, das imstande ist zum:
Empfangen von Mikrofondaten über das Schnittstellensystem;
Bestimmen, zumindest teilweise basierend auf den Mikrofondaten, von Instanzen von einem oder mehreren akustischen Ereignissen, wobei die Instanzen von einem oder mehreren akustischen Ereignissen Gesprächsdynamikdaten einschließen, wobei das Bestimmen einer Instanz eines akustischen Ereignisses Folgendes beinhaltet:
- Bestimmen einer Instanz einer ansteigenden Flexion in der Sprache eines Benutzers;
- Bestimmen, ob die Sprache des Benutzers einer Frage oder einer Aussage entspricht; **gekennzeichnet durch** Bereitstellen einer Rückmeldung zur Verhaltensmodifikation über das Schnittstellensystem, wenn eine Instanz einer ansteigenden Flexion in der Sprache des Benutzers bestimmt wird, wenn bestimmt wird, dass die Sprache des Benutzers nicht einer Frage entspricht.

2. Einrichtung nach Anspruch 1, wobei das Bestimmen einer Instanz eines akustischen Ereignisses des Weiteren das Bestimmen einer Instanz des Überschreitens einer Gesprächsdominanzmetrik beinhaltet, die zumindest teilweise auf einem Teil der gesamten Sprache basiert, die von einem dominanten Gesprächsteilnehmer während eines Zeitintervalls geäußert wird.

3. Einrichtung nach Anspruch 2, wobei die Gesprächsdominanzmetrik zumindest teilweise auf einem oder mehreren Hinweisen darauf basiert, dass ein Gesprächsteilnehmer einen anderen Gesprächsteilnehmer unterbricht.

4. Einrichtung nach einem der Ansprüche 1-3, wobei das Bestimmen eines akustischen Ereignisses des Weiteren das Bestimmen einer Instanz von mindestens einem akustischen Ereignis aus einer Liste von akustischen Ereignissen beinhaltet, bestehend aus: Stottern und Unflüssigkeit.

5. Einrichtung nach einem der Ansprüche 1-4, wobei das Bestimmen eines akustischen Ereignisses des Weiteren das Bestimmen einer Instanz eines Umgebungsgeräusches beinhaltet, das über einer Umgebungsgeräuschschwelle liegt.

6. Nicht-transitorisches Medium, das darauf gespeicherte Software aufweist, wobei die Software Anweisungen zum Steuern einer oder mehrerer Vorrichtungen einschließt, um ein Verfahren zum Bereitstellen von Rückmeldung zur Verhaltensmodifikation durchzuführen, wobei das Verfahren Folgendes umfasst:
Empfangen von Mikrofondaten;
Bestimmen, zumindest teilweise basierend auf den Mikrofondaten, von Instanzen von einem oder mehreren akustischen Ereignissen, wobei die Instanzen von einem oder mehreren akustischen Ereignissen Gesprächsdynamikdaten einschließen, wobei das Bestimmen einer Instanz eines akustischen Ereignisses Folgendes beinhaltet:
- Bestimmen einer Instanz einer ansteigenden Flexion in der Sprache eines Benutzers;
- Bestimmen, ob die Sprache des Benutzers einer Frage oder einer Aussage entspricht; **gekennzeichnet durch** Bereitstellen einer Rückmeldung zur Verhaltensmodifikation über das Schnittstellensystem, wenn eine Instanz einer ansteigenden Flexion in der Sprache des Benutzers bestimmt wird, wenn bestimmt wird, dass die Sprache des Benutzers nicht einer Frage entspricht.

7. Verfahren zum Bereitstellen einer Rückmeldung zur Verhaltensmodifikation, wobei das Verfahren Folgendes umfasst:
Empfangen von Mikrofondaten durch ein Steuersystem;
Bestimmen, durch das Steuersystem und zumindest teilweise basierend auf den Mikrofondaten, von Instanzen von einem oder mehreren akustischen Ereignissen, wobei die Instanzen von einem oder mehreren akustischen Ereignissen Gesprächsdynamikdaten einschließen, wobei das Bestimmen einer Instanz eines akustischen Ereignisses Folgendes beinhaltet:
- Bestimmen einer Instanz einer ansteigenden Flexion in der Sprache eines Benutzers;
- Bestimmen, ob die Sprache des Benutzers einer Frage oder einer Aussage entspricht; **gekennzeichnet durch** Bereitstellen einer Rückmeldung zur Verhaltensmodifikation über das Schnittstellensystem, wenn eine Instanz einer ansteigenden Flexion in der Sprache des Benutzers bestimmt wird, wenn bestimmt wird, dass die Sprache des Benutzers nicht einer Frage entspricht.

## Revendications

1. Appareil, comprenant :
un système d'interface ; et
un système de commande capable de :
recevoir, par le biais du système d'interface, des données de microphone ;
déterminer, sur la base au moins en partie des données de microphone, des cas d'un ou plusieurs événements acoustiques, dans lequel les cas d'un ou plusieurs événements acoustiques incluent des données dynamiques conversationnelles, dans lequel la détermination d'un cas d'événement acoustique implique :
- la détermination d'un cas d'inflexion ascendante lors du discours d'un utilisateur ;
- la détermination permettant de savoir si le discours de l'utilisateur correspond à une question ou à une déclaration ; **caractérisé par**
la fourniture d'une rétroaction de modification de comportement, par le biais du système d'interface, si un cas d'inflexion ascendante est déterminé lors du discours de l'utilisateur lorsqu'il est déterminé que le discours de l'utilisateur ne correspond pas à une question.

2. Appareil selon la revendication 1, dans lequel la détermination d'un cas d'événement acoustique implique en outre la détermination d'un cas de dépassement d'une métrique de dominance conversationnelle qui est basée, au moins en partie, sur une fraction du discours total prononcé par un participant à la conversation principale pendant un intervalle de temps.

3. Appareil selon la revendication 2, dans lequel la métrique de dominance conversationnelle est basée, au moins en partie, sur une ou plusieurs indications d'un participant à la conversation interrompant un autre participant à la conversation.

4. Appareil selon l'une quelconque des revendications 1-3, dans lequel la détermination d'un cas d'événement acoustique implique en outre la détermination d'un cas d'au moins un événement acoustique à partir d'une liste d'événements acoustiques consistant en : bégaiement et disfluence.

5. Appareil selon l'une quelconque des revendications 1-4, dans lequel la détermination d'un cas d'événement acoustique implique en outre la détermination d'un cas de bruit ambiant qui est supérieur à un seuil de bruit ambiant.

6. Support non transitoire sur lequel est stocké un logiciel, le logiciel incluant des instructions permettant de commander un ou plusieurs dispositifs pour réaliser un procédé de fourniture d'une rétroaction de modification de comportement, le procédé comprenant le fait de :
recevoir des données de microphone ;
déterminer, sur la base au moins en partie des données de microphone, des cas d'un ou plusieurs événements acoustiques, dans lequel les cas d'un ou plusieurs événements acoustiques incluent des données dynamiques conversationnelles, dans lequel la détermination d'un cas d'événement acoustique implique :
- la détermination d'un cas d'inflexion ascendante lors du discours d'un utilisateur ;
- la détermination permettant de savoir si le discours de l'utilisateur correspond à une question ou à une déclaration ; **caractérisé par** la fourniture d'une rétroaction de modification de comportement si un cas d'inflexion ascendante est déterminé lors du discours de l'utilisateur lorsqu'il est déterminé que le discours de l'utilisateur ne correspond pas à une question.

7. Procédé de fourniture d'une rétroaction de modification de comportement, le procédé comprenant le fait de :
recevoir, par le système de commande, des données de microphone ;
déterminer, par le système de commande et sur la base au moins en partie des données de microphone, des cas d'un ou plusieurs événements acoustiques, dans lequel les cas d'un ou plusieurs événements acoustiques incluent des données dynamiques conversationnelles, dans lequel la détermination d'un cas d'événement acoustique implique :
- la détermination d'un cas d'inflexion ascendante lors du discours d'un utilisateur ;
- la détermination permettant de savoir si le discours de l'utilisateur correspond à une question ou à une déclaration ; **caractérisé par**
la fourniture d'une rétroaction de modification de comportement, par le biais d'un système d'interface, si un cas d'inflexion ascendante est déterminé lors du discours de l'utilisateur lorsqu'il est déterminé que le discours de l'utilisateur ne correspond pas à une question.
